(19) Europäisches Patentamt
European Patent Office
Office européen des brevets

(11) **EP 4 364 963 B1**

(12) **EUROPEAN PATENT SPECIFICATION**

(45) Date of publication and mention of the grant of the patent:
**25.03.2026 Bulletin 2026/13**

(21) Application number: **23204878.5**

(22) Date of filing: **20.10.2023**

(51) International Patent Classification (IPC):
***B60C 1/00*** *(2006.01)* ***C08C 19/02*** *(2006.01)*
***C08C 19/44*** *(2006.01)* ***C08L 7/00*** *(2006.01)*
***B60C 11/00*** *(2006.01)* ***B60C 11/03*** *(2006.01)*
*C08F 236/10* *(2006.01)*

(52) Cooperative Patent Classification (CPC):
(C-Sets available)
**C08L 7/00; B60C 1/00; B60C 11/00; B60C 11/005; B60C 11/0306; C08C 19/02; C08C 19/44;**
B60C 1/0016; B60C 1/0025; C08F 236/10 (Cont.)

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.11.2022 JP 2022178330**

(43) Date of publication of application:
**08.05.2024 Bulletin 2024/19**

(73) Proprietor: **Sumitomo Rubber Industries, Ltd.**
**Kobe-shi, Hyogo 651-0072 (JP)**

(72) Inventors:
- **MATSUI, Tomoya**
**Kobe-shi, Hyogo, 651-0072 (JP)**
- **ONO, Shuichiro**
**Kobe-shi, Hyogo, 651-0072 (JP)**

(74) Representative: **Manitz Finsterwald Patent- und Rechtsanwaltspartnerschaft mbB**
**Martin-Greif-Straße 1**
**80336 München (DE)**

(56) References cited:
**EP-A1- 4 166 350** **EP-A1- 4 166 351**
**WO-A1-2021/261009** **WO-A1-2021/261010**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/00, C08L 15/00, C08L 91/00, C08L 91/06, C08K 3/04, C08K 3/36, C08K 5/548, C08K 3/22, C08K 5/09, C08K 5/14, C08K 5/18, C08K 5/3437, C08K 5/47;**
C08F 236/10, C08F 2/06;
C08F 236/10, C08F 4/48

## Description

TECHNICAL FIELD

The present invention relates to a tire.

BACKGROUND ART

Tires are required to have various performances. Recently, tires have been desired to maintain ride quality even after a long period of time.

SUMMARY OF INVENTION

TECHNICAL PROBLEM

The present invention aims to solve the above problem and to provide tires capable of maintaining good ride quality even after a long period of time.

SOLUTION TO PROBLEM

The present invention relates to a tire including a tire component, the tire component containing:

a rubber component including a copolymer having an ethylene unit and a styrene unit and having a modifying group capable of reacting with at least one of carbon black or silica, and at least one of an isoprene-based rubber or polybutadiene rubber; and
carbon black,
the tire satisfying the following formula (1) and at least one of the following formula (2) or the following formula (3):

$$(1)\quad AE > 5.0$$

where AE denotes an acetone extractable content (% by mass) of the tire component,

$$(2)\quad Tw < 12.0$$

where Tw denotes a thickness (mm) of a surface rubber layer at a tire maximum width position,

$$(3)\quad Tt < 12.0$$

where Tt denotes a thickness (mm) of a tread portion.

ADVANTAGEOUS EFFECTS OF INVENTION

The present invention relates to a tire including a tire component, the tire component containing: a rubber component including a copolymer having an ethylene unit and a styrene unit and having a modifying group capable of reacting with at least one of carbon black or silica, and at least one of an isoprene-based rubber or polybutadiene rubber; and carbon black, the tire satisfying the formula (1) and at least one of the formula (2) or the formula (3). This tire can maintain good ride quality even after a long period of time.

BRIEF DESCRIPTION OF DRAWINGS

FIG. 1 shows a cross-sectional view of a part of a pneumatic tire.
FIG. 2 shows an enlarged cross-sectional view of a tread portion 4 and its vicinity of a tire 2 in FIG. 1.
FIG. 3 shows a cross-sectional view of a part of a pneumatic tire.

DESCRIPTION OF EMBODIMENTS

The tire of the present invention includes a tire component that contains: a rubber component including a copolymer having an ethylene unit and a styrene unit and having a modifying group capable of reacting with at least one of carbon black or silica, and at least one of an isoprene-based rubber or polybutadiene rubber; and carbon black. The tire satisfies the formula (1) and at least one of the formula (2) or the formula (3).

The reason for the above-described advantageous effect is not exactly clear, but the advantageous effect is believed to be due to the following mechanism.

Acetone extractable components such as oils leach out of the system over time, potentially leading to degradation over time.

In contrast, the use of the copolymer having an ethylene unit and a styrene unit and having a modifying group capable of reacting with at least one of carbon black or silica can suppress the migration of oils, etc. because the copolymer usually has a fewer double bonds than general-purpose styrene-butadiene rubber or similar rubbers, and the styrene unit can reduce the dispersion rate in the system.

Moreover, the copolymer blended with at least one of an isoprene-based rubber or polybutadiene rubber forms an interface to suppress the migration of oils, etc.

The presence of the copolymer together with carbon black can enhance the dispersion of the carbon black, thereby increasing the effective surface area of the carbon black. Since carbon black has a high affinity with oils, etc., the carbon black with an increased effective surface area can suppress the migration of oils, etc.

In the tire component which includes silica, the copolymer having a modifying group capable of reacting with silica and having an ethylene unit and a styrene unit can cover the hydrophilic silica surface. Thus, acetone extractable components such as oils are less likely to contact the hydrophilic part, thereby suppressing the migration of oils, etc.

In addition, the surface rubber layer having a small thickness at the tire maximum width position and the tread portion having a small thickness can reduce the centrifugal force caused during driving, thereby suppressing the migration of oils, etc.

Accordingly, the present invention can presumably suppress a reduction in acetone extractable components over time and therefore can maintain good ride quality even after a long period of time.

As described above, the present invention solves the problem (aim) in maintaining good ride quality even after a long period of time by providing a tire that includes a tire component containing: a rubber component including a copolymer having an ethylene unit and a styrene unit and having a modifying group capable of reacting with at least one of carbon black or silica, and at least one of an isoprene-based rubber or polybutadiene rubber; and carbon black, and also satisfies the formula (1): $AE > 5.0$ and at least one of the formula (2): $Tw < 12.0$ or the formula (3): $Tt < 12.0$. In other words, the parameters of the formulas (1) to (3) do not define the problem (aim). The problem herein is to maintain good ride quality even after a long period of time. In order to solve the problem, the tire has been formulated to satisfy the parameters.

First, the components constituting the tire component in the present invention will be described.

The tire component includes a tire component rubber composition that contains: a rubber component including a copolymer having an ethylene unit and a styrene unit and having a modifying group capable of reacting with at least one of carbon black or silica, and at least one of an isoprene-based rubber or polybutadiene rubber; and carbon black.

(Rubber component)

The tire component rubber composition contains a copolymer having an ethylene unit and a styrene unit and having a modifying group capable of reacting with at least one of carbon black or silica (hereinafter, also referred to as "modified copolymer") as a rubber component. The modified copolymer may be used alone or in combinations of two or more.

The term "rubber component" in the present invention refers to a component contributing to crosslinking and generally corresponds to a polymer component which has a weight average molecular weight (Mw) of 10000 or more and is not extractable with acetone.

The weight average molecular weight of a rubber component is preferably 50000 or more, more preferably 150000 or more, still more preferably 200000 or more, while it is preferably 2000000 or less, more preferably 1500000 or less, still more preferably 1000000 or less. When the weight average molecular weight is within the range indicated above, desired performances such as tire performances tend to be imparted.

Herein, the term "capable of reacting with at least one of carbon black or silica" means that a covalent bond or a bond formed by an intermolecular force weaker than a covalent bond (e.g., electromagnetic forces between molecules such as ion-dipole interaction, dipole-dipole interaction, hydrogen bond, or van der Waals force) may be formed with at least one of carbon black or silica. The term "modifying group capable of reacting with at least one of carbon black or silica" refers to a group having at least one atom capable of reacting with at least one of carbon black or silica, such as a nitrogen atom, a sulfur atom, a phosphorus atom, an oxygen atom, a silicon atom, or a tin atom.

The amount of ethylene structures in the modified copolymer is preferably 3% by mass or more, more preferably 5% by mass or more, still more preferably 20% by mass or more, particularly preferably 33% by mass or more, while it is preferably 90% by mass or less, more preferably 80% by mass or less, still more preferably 70% by mass or less, particularly preferably 60% by mass or less. When the amount is within the range indicated above, the advantageous effect tends to be better achieved.

The ethylene structures in the modified copolymer include all of ethylene structures obtained by copolymerizing ethylene monomers and ethylene structures obtained by polymerizing conjugated diene monomers and then hydrogenating resulting polymers. For example, hydrogenation of 1,4-butadiene units gives two ethylene structures, while hydrogenation of 1,4-isoprene units gives one propylene structure and one ethylene structure.

The ethylene structures in the modified copolymer may be measured by the method described later in EXAMPLES.

The ethylene structures in the modified copolymer can be adjusted within the above-described numerical range by controlling the amount of ethylene added, the amount of conjugated diene monomers added and the degree of hydrogenation, etc.

The amount of styrene units in the modified copolymer is preferably 5% by mass or more, more preferably 8% by mass or more, still more preferably 10% by mass or more, particularly preferably 15% by mass or more, while it is preferably 45% by mass or less, more preferably 30% by mass or less, still more preferably 25% by mass or less. When the amount is within the range indicated above, the advantageous effect tends to be better achieved.

The amount of styrene units (bonded styrene content) in the modified copolymer may be measured by the method described later in EXAMPLES.

The amount of styrene units in the modified copolymer can be adjusted within the above-described numerical range by controlling the amount of styrene added in polymerization.

The amount of vinyl units and butylene units in the modified copolymer is preferably 20 mol% or more, more preferably 25 mol% or more, still more preferably 30 mol% or more, particularly preferably 39 mol% or more, while it is preferably 60 mol% or less, more preferably 50 mol% or less, still more preferably 45 mol% or less. When the amount is within the range indicated above, the advantageous effect tends to be better achieved.

The amount of vinyl units and butylene units in the modified copolymer may be measured by the method described later in EXAMPLE.

The amount of vinyl units and butylene units in the modified copolymer can be adjusted within the above-described numerical range by adding polar compounds or controlling the polymerization temperature in the polymerization for obtaining the modified copolymer.

The iodine value of the modified copolymer is preferably 10 (g/100 g) or higher, more preferably 15 (g/100 g) or higher, still more preferably 30 (g/100 g) or higher, particularly preferably 50 (g/100 g) or higher, while it is preferably 250 (g/100 g) or lower, more preferably 200 (g/100 g) or lower, still more preferably 120 (g/100 g) or lower, particularly preferably 108 (g/100 g) or lower. When the iodine value is within the range indicated above, the advantageous effect tends to be better achieved.

Here, the iodine value may be measured by a method in accordance with JIS K 0070:1992.

An iodine value is the amount of halogen in terms of grams of iodine reacting with 100 g of a target material. Therefore, the unit of the iodine value is "g/100 g".

For example, when a conjugated diene monomer and a styrene monomer are copolymerized in the below-described method of producing the modified copolymer, since a conjugated diene monomer has a double bond, the smaller the amount of the conjugated diene monomer is, the lower the iodine value of the modified copolymer becomes. In the case of a hydrogenated conjugated diene monomer, the higher the degree of hydrogenation is, the lower the iodine value becomes.

The iodine value of the modified copolymer can be adjusted within the above-described numerical range by controlling the conditions of polymerization, such as the amount of a conjugated diene monomer having an unsaturated bond, etc. to be added, polymerization time, and polymerization temperature, and the conditions of hydrogenation, such as the degree of hydrogenation and hydrogenation time.

The modified copolymer is a copolymer having an ethylene unit and a styrene unit and having a modifying group capable of reacting with at least one of carbon black or silica.

The modifying group may be any group capable of reacting with at least one of carbon black or silica. To better achieve the advantageous effect, the modifying group is preferably a group having at least one atom selected from the group consisting of nitrogen atom, oxygen atom, tin atom, and silicon atom. The modifying group may be a monovalent, divalent, or trivalent group.

The modified copolymer may be any copolymer having a modifying group capable of reacting with at least one of carbon black or silica. Examples include chain end-modified copolymers obtained by modifying at least one chain end of copolymers with a compound (modifier) containing the modifying group (i.e., chain end-modified copolymers terminated with the modifying group); backbone-modified copolymers having the modifying group in the backbone; backbone- and

chain end-modified copolymers having the modifying group in both the backbone and chain end(s) (e.g., backbone- and chain end-modified copolymers in which the backbone has the modifying group, and at least one chain end is modified with the modifier); and chain end-modified copolymers into which a hydroxy group or an epoxy group has been introduced by modification (coupling) with a polyfunctional compound having two or more epoxy groups in the molecule.

Specific examples of the modifying group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxy, nitrile, pyridyl, alkoxy, hydroxy, oxy, and epoxy groups. These modifying groups may be substituted.

The modifying group can be introduced by, for example, reacting a compound capable of introducing the modifying group with a backbone polymer. Preferred examples of the compound include compounds capable of introducing a group having at least one atom selected from the group consisting of nitrogen atom, oxygen atom, tin atom, and silicon atom. These may be used alone or in combinations of two or more. Examples also include compounds capable of introducing the modifying group into backbone polymers through addition reaction, grafting reaction, etc. and coupling agents capable of coupling backbone polymers.

Desirably, compounds capable of introducing a group having at least one of tin atom and oxygen atom among compounds capable of introducing a group having at least one atom selected from the group consisting of nitrogen atom, oxygen atom, tin atom, and silicon atom are compounds represented by the following formula (i):

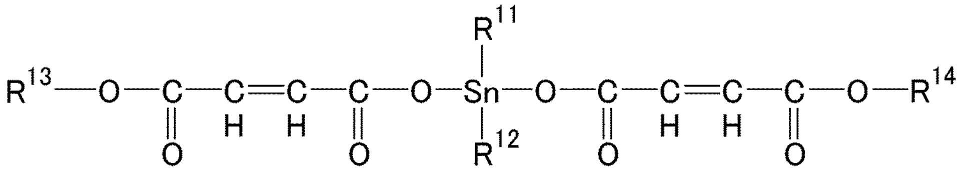

(i)

wherein $R^{11}$ to $R^{14}$ are the same or different and each represent a substituted or unsubstituted monovalent hydrocarbon group optionally containing a heteroatom.

The substituted or unsubstituted monovalent hydrocarbon group optionally containing a heteroatom for $R^{11}$ to $R^{14}$ may be linear, branched, or cyclic, preferably linear. Non-limiting examples of heteroatoms include oxygen atom and nitrogen atom. Non-limiting examples of substituents include known groups such as a hydroxy group and a halogen group (-Cl, -Br, etc.). The monovalent hydrocarbon group may have one or more heteroatoms or one or more substituents.

The carbon number of the monovalent hydrocarbon group for $R^{11}$ or $R^{12}$ is preferably 1 to 20, more preferably 3 to 15, still more preferably 6 to 10, further preferably 7 or 8. The carbon number of the monovalent hydrocarbon group for $R^{13}$ or $R^{14}$ is preferably 1 to 30, more preferably 8 to 25, still more preferably 12 to 20, further preferably 15 to 18.

Examples of the substituted or unsubstituted monovalent hydrocarbon group optionally containing a heteroatom for $R^{11}$ to $R^{14}$ include substituted or unsubstituted linear alkyl, branched alkyl, cyclic alkyl, aryl, aralkyl, and alkoxy groups each optionally containing a heteroatom.

Examples of substituted or unsubstituted linear or branched alkyl groups each optionally containing a heteroatom for $R^{11}$ to $R^{14}$ include methyl, ethyl, propyl, butyl, pentyl, hexyl, heptyl, octyl, nonyl, decyl, dodecyl, octadecyl, isopropyl, isobutyl, isopentyl, sec-butyl, tert-butyl, sec-pentyl, tert-pentyl, tert-octyl, neopentyl, cyclopropyl, cyclobutyl, cyclopentyl, cyclohexyl, adamantyl, norbornyl, boronyl, and 4-decylcyclohexyl groups, and these groups each containing a heteroatom. Examples of substituted or unsubstituted cyclic alkyl groups each optionally containing a heteroatom include cyclopropyl, cyclobutyl, cyclopentyl, cyclohexyl, cycloheptyl, cyclooctyl, adamantyl, 1-ethylcyclopentyl, and 1-ethylcyclohexyl groups, and these groups each containing a heteroatom. Examples of substituted or unsubstituted aryl groups each optionally containing a heteroatom include phenyl, tolyl, xylyl, biphenyl, naphthyl, anthryl, and phenanthryl groups, and these groups each containing a heteroatom. Examples of substituted or unsubstituted aralkyl groups each optionally containing a heteroatom include benzyl and phenethyl groups, and these groups each containing a heteroatom. Examples of substituted or unsubstituted alkoxy groups each optionally containing a heteroatom include methoxy, ethoxy, n-propoxy, isopropoxy, n-butoxy, sec-butoxy, isobutoxy, t-butoxy, n-pentyloxy, and n-hexyloxy groups, and these groups each containing a heteroatom.

Specific examples of the compound capable of introducing a group having at least one of tin atom and oxygen atom include tin-containing compounds such as bis(1-octadecyl maleate)dioctyltin(IV), with bis(1-octadecyl maleate) dioctyltin being preferred among these. Tin-containing compounds such as bis(1-octadecyl maleate)dioctyltin act as a coupling agent for a polymer, thereby introducing a modifying group into the polymer.

Desirably, compounds capable of introducing a group having at least one of nitrogen atom, oxygen atom, and silicon atom among compounds capable of introducing a group having at least one atom selected from the group consisting of nitrogen atom, oxygen atom, tin atom, and silicon atom are compounds represented by the following formula

(ii):

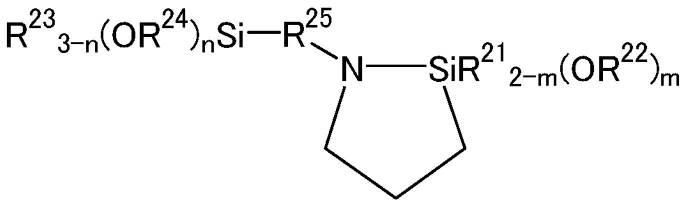

(ii)

wherein $R^{21}$ to $R^{24}$ are the same or different and each represent a substituted or unsubstituted monovalent hydrocarbon group optionally containing a heteroatom, $R^{25}$ represents a substituted or unsubstituted divalent hydrocarbon group optionally containing a heteroatom, m is the same or different and each represents 1 or 2, and n is the same or different and each represents 1, 2, or 3.

The substituted or unsubstituted monovalent hydrocarbon group optionally containing a heteroatom for $R^{21}$ to $R^{24}$ may be linear, branched, or cyclic, preferably linear. Non-limiting examples of heteroatoms and substituents include the above-described heteroatoms and substituents. The monovalent hydrocarbon group may have one or more heteroatoms or one or more substituents.

The carbon number of the monovalent hydrocarbon group for $R^{21}$ to $R^{24}$ is preferably 1 to 15, more preferably 1 to 5, still more preferably 1 to 3.

Examples of the substituted or unsubstituted monovalent hydrocarbon group optionally containing a heteroatom for $R^{21}$ to $R^{24}$ include the groups described above for $R^{11}$ to $R^{14}$.

Specific examples of $R^{21}$ to $R^{24}$ include the groups described above for $R^{11}$ to $R^{14}$.

The substituted or unsubstituted divalent hydrocarbon group optionally containing a heteroatom for $R^{25}$ may be linear, branched, or cyclic, preferably linear. Non-limiting examples of heteroatoms and substituents include the above-described heteroatoms and substituents. The divalent hydrocarbon group may have one or more heteroatoms or one or more substituents.

The carbon number of the divalent hydrocarbon group for $R^{25}$ is preferably 1 to 15, more preferably 2 to 10, still more preferably 3 to 5.

Examples of the substituted or unsubstituted divalent hydrocarbon group optionally containing a heteroatom for $R^{25}$ include substituted or unsubstituted alkylene, alkenylene, and arylene groups each optionally containing a heteroatom, with alkylene groups being preferred.

Examples of the alkylene groups include linear alkylene groups such as methylene, ethylene, n-propylene, n-butylene, pentylene, and hexylene groups, and branched alkylene groups such as isopropylene, isobutylene, and 2-methylpropylene groups. Linear alkylene groups are preferred among these.

Preferably, m is 2, and n is preferably 2 or 3, more preferably 3.

Specific examples of the compound capable of introducing a group having at least one of nitrogen atom, oxygen atom, and silicon atom include 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy-2-methyl-1-(3-trimethoxysilylpropyl)-1-aza-2-silacyclopentane, 2-ethoxy-2-ethyl-1-(3-triethoxysilylpropyl)-1-aza-2-silacyclopentane, 2-methoxy-2-methyl-1-(3-dimethoxymethylsilylpropyl)-1-aza-2-silacyclopentane, and 2-ethoxy-2-ethyl-1-(3-diethoxyethylsilylpropyl-1-aza-2-silacyclopentane. Preferred among these is 2,2-dimethoxy-1-(3-trimethoxysilylpropyl)-1-aza-2-silacyclopentane.

The glass transition temperature (Tg) of the modified copolymer is preferably -90°C or higher, more preferably -80°C or higher, still more preferably -75°C or higher, while it is preferably -15°C or lower, more preferably - 30°C or lower, still more preferably -40°C or lower. When the glass transition temperature is within the range indicated above, the advantageous effect tends to be better achieved.

Here, the glass transition temperature is determined by recording a DSC curve while increasing the temperature within a predetermined temperature range in accordance with ISO 22768:2006, obtaining a peak top (inflection point) of the DSC derivative curve, and determining the peak top temperature as the glass transition temperature.

The weight average molecular weight (Mw) of the modified copolymer is preferably 200000 or more, more preferably 300000 or more, still more preferably 350000 or more, while it is preferably 2000000 or less, more preferably 1000000 or less, still more preferably 700000 or less, particularly preferably 450000 or less. When the weight average molecular weight is within the range indicated above, the advantageous effect tends to be better achieved.

Here, the weight average molecular weight can be calculated from a polystyrene-equivalent molecular weight measured by gel permeation chromatography (GPC).

The weight average molecular weight and the molecular weight distribution of the modified copolymer can be adjusted within the above-described numerical ranges by controlling polymerization conditions in polymerization, such as the amount of monomers added, polymerization time, polymerization temperature, and polymerization pressure.

The degree of hydrogenation of the modified copolymer (percentage of hydrogenated 1,3-butadiene moieties in the copolymer) is preferably 60 mol% or higher, more preferably 70 mol% or higher, still more preferably 75 mol% or higher, while it is preferably 95 mol% or lower, more preferably 92 mol% or lower, still more preferably 90 mol% or lower. When the degree of hydrogenation is within the range indicated above, the advantageous effect tends to be better achieved.

Here, the degree of hydrogenation may be measured by the method described later in EXAMPLES.

Examples of methods of producing the modified copolymer include a method involving polymerizing or copolymerizing at least a conjugated diene monomer and styrene and then hydrogenating a part or most of double bonds in the (co)polymer and a method involving copolymerizing at least ethylene, a conjugated diene monomer, and styrene.

Examples of the method involving polymerizing or copolymerizing at least a conjugated diene monomer and styrene and subsequent hydrogenation include a method involving adding various additives, polymerizing a conjugated diene monomer and styrene by anionic polymerization under known conditions, optionally copolymerizing with other monomers, and hydrogenating the resulting (co)polymer as described in, for example, WO96/05250, JP 2000-053706 A, WO2003/085010, WO2019/151126, WO2019/151127, WO2002/002663, or WO2015/006179.

Examples of the method involving copolymerizing at least ethylene, a conjugated diene monomer, and styrene include a method involving copolymerizing ethylene, a conjugated diene monomer, and styrene, and optionally other monomers by coordination polymerization using various additives under various conditions as described in, for example, WO2019/078083, WO2019/171679, or WO2019/142501.

To obtain a greater freedom of polymer structure design, the modified copolymer is preferably produced by polymerizing a conjugated diene monomer and styrene and then hydrogenating the resulting polymer.

Examples of the conjugated diene monomer include, but not limited to, 1,3-butadiene, isoprene, 2,3-dimethyl-1,3-butadiene, 1,3-pentadiene, 3-methyl-1,3-pentadiene, 1,3-hexadiene, and 1,3-heptadiene. Preferred are 1,3-butadiene and isoprene, and more preferred is 1,3-butadiene among these. These may be used alone or in combinations of two or more.

Examples of monomers to be polymerized to produce the modified copolymer include the above-described monomers and optional other monomers.

Examples of other monomers include, but not limited to, vinyl aromatic monomers other than styrene (e.g., p-methylstyrene, α-methylstyrene, vinylethylbenzene, vinylxylene, vinylnaphthalene, diphenylethylene, vinylbenzyl dimethylamine, (4-vinylbenzyl)dimethylaminoethyl ether, N,N dimethylaminoethylstyrene, N,N-dimethylaminomethylstyrene), unsaturated carboxylates, unsaturated carboxylic acids, α,β-unsaturated nitrile compounds, α-olefins (e.g., propylene, butylene, pentene, hexene), ethylene, myrcene, ethylidene norbornene, isopropylidene norbornene, cyclopentadiene, and divinylbenzene. These may be used alone or in combinations of two or more.

When the modified copolymer is produced by copolymerizing a conjugated diene monomer and styrene and optionally other monomers and then hydrogenating the resulting polymer, the vinyl bond content of the conjugated diene monomer unit in the conjugated diene-based polymer before the hydrogenation is important to obtain excellent properties. The vinyl bond content is preferably 10 mol% or higher, more preferably 20 mol% or higher, while it is preferably 75 mol% or lower, more preferably 60 mol% or lower, still more preferably 45 mol% or lower, further preferably 30 mol% or lower.

The polymerization and hydrogenation may be each performed in either a batch process or a continuous process.

The degree of hydrogenation of the modified copolymer and the intramolecular or intermolecular distribution of monomer units such as ethylene, styrene, and conjugated diene monomers of the modified copolymer are not limited, and may be uniform or not uniform and may be a specific distribution.

The amount of the modified copolymer based on 100% by mass of the rubber component in the tire component rubber composition is not limited, and it is preferably 5% by mass or more, more preferably 7.5% by mass or more, still more preferably 10% by mass or more, further preferably 15% by mass or more, further preferably 20% by mass or more, further preferably 25% by mass or more, particularly preferably 30% by mass or more. The upper limit is not limited, and it is preferably 60% by mass or less, more preferably 50% by mass or less, still more preferably 45% by mass or less. When the amount is within the range indicated above, the advantageous effect tends to be suitably achieved.

When the tire component rubber composition is a sidewall rubber composition, the amount of the modified copolymer based on 100% by mass of the rubber component is not limited, and it is preferably 5% by mass or more, more preferably 10% by mass or more, still more preferably 20% by mass or more, particularly preferably 30% by mass or more. The upper limit is not limited, and it is preferably 60% by mass or less, more preferably 50% by mass or less, still more preferably 45% by mass or less. When the amount is within the range indicated above, the advantageous effect tends to be suitably achieved.

When the tire component rubber composition is a clinch apex rubber composition, the amount of the modified

copolymer based on 100% by mass of the rubber component is not limited, and it is preferably 5% by mass or more, more preferably 7.5% by mass or more, still more preferably 10% by mass or more, further preferably 15% by mass or more, further preferably 20% by mass or more, further preferably 25% by mass or more, particularly preferably 30% by mass or more. The upper limit is not limited, and it is preferably 60% by mass or less, more preferably 50% by mass or less, still more preferably 45% by mass or less. When the amount is within the range indicated above, the advantageous effect tends to be suitably achieved.

When the tire component rubber composition is a base tread rubber composition, the amount of the modified copolymer based on 100% by mass of the rubber component is not limited, and it is preferably 5% by mass or more, more preferably 10% by mass or more, still more preferably 20% by mass or more, particularly preferably 30% by mass or more. The upper limit is not limited, and it is preferably 60% by mass or less, more preferably 50% by mass or less, still more preferably 45% by mass or less. When the amount is within the range indicated above, the advantageous effect tends to be suitably achieved.

The tire component rubber composition contains at least one of an isoprene-based rubber or polybutadiene rubber (BR).

Examples of the isoprene-based rubber include natural rubbers (NR), polyisoprene rubbers (IR), refined NR, modified NR, and modified IR. Examples of NR include those commonly used in the rubber industry such as SIR20, RSS# 3, and TSR20. Any IR may be used, including those commonly used in the rubber industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. The isoprene-based rubber may be either an unmodified isoprene-based rubber or a modified isoprene-based rubber such as ENR. These may be used alone or in combinations of two or more.

Any BR may be used, and examples include high-cis BR having a high cis content, BR containing syndiotactic polybutadiene crystals, and BR synthesized using rare earth catalysts (rare earth-catalyzed BR). These may be used alone or in combinations of two or more. To improve abrasion resistance, high-cis BR having a cis content of 90% by mass or higher is preferred among these. The BR may be either an unmodified BR or a modified BR such as a carboxylic acid-modified BR. These may be used alone or in combinations of two or more.

The cis content of the BR is preferably 90% by mass or higher, while it is preferably 99% mass or lower, more preferably 98% by mass or lower. When the cis content is within the range indicated above, the advantageous effect tends to be better achieved.

The cis content of the BR may be measured by infrared absorption spectrometry.

Usable commercial products of BR are available from Ube Industries, Ltd., JSR Corporation, Asahi Kasei Corporation, Zeon Corporation, etc.

The tire component rubber composition may contain different rubbers other than the modified copolymer, isoprene-based rubber, and BR. Examples of the different rubber include diene-based rubbers such as styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). Examples also include polymers such as butyl-based rubbers and fluororubbers. SBR is preferred among these. These may be used alone or in combinations of two or more.

Any SBR may be used, and examples include emulsion-polymerized styrene-butadiene rubbers (E-SBR) and solution-polymerized styrene-butadiene rubbers (S-SBR). These may be used alone or in combinations of two or more. The SBR may be either an unmodified SBR or a modified SBR such as a carboxylic acid-modified SBR. These may be used alone or in combinations of two or more.

The styrene content of the SBR is preferably 5% by mass or higher, more preferably 20% by mass or higher, still more preferably 25% by mass or higher. The styrene content is preferably 45% by mass or lower, more preferably 40% by mass or lower, still more preferably 35% by mass or lower. When the styrene content is within the range indicated above, the advantageous effect tends to be better achieved.

Herein, the styrene content can be measured by $^{1}$H-NMR analysis.

The vinyl bond content of the SBR is preferably 5% by mass or higher, more preferably 20% by mass or higher, still more preferably 40% by mass or higher, particularly preferably 50% by mass or higher. The vinyl bond content is preferably 80% by mass or lower, more preferably 70% by mass or lower, still more preferably 65% by mass or lower. When the styrene content is within the range indicated above, the advantageous effect tends to be better achieved.

Herein, the vinyl bond content (1,2-butadiene unit content) can be measured by infrared absorption spectrometry.

SBR products manufactured or sold by Sumitomo Chemical Co., Ltd., JSR Corporation, Asahi Kasei Corporation, Zeon Corporation, etc. may be used as the SBR.

The isoprene-based rubber and the BR each may be an unmodified diene-based rubber or a modified diene-based rubber.

The amount of the isoprene-based rubber based on 100% by mass of the rubber component in the tire

component rubber composition is preferably 20% by mass or more, more preferably 40% by mass or more, still more preferably 45% by mass or more. The upper limit is not limited, and it is preferably 90% by mass or less, more preferably 80% by mass or less, still more preferably 70% by mass or less, further preferably 60% by mass or less, further preferably 50% by mass or less. When the amount is within the range indicated above, the advantageous effect tends to be suitably achieved.

When the tire component rubber composition is a sidewall rubber composition, the amount of the isoprene-based rubber based on 100% by mass of the rubber component is preferably 30% by mass or more, more preferably 45% by mass or more. The upper limit is not limited, and it is preferably 70% by mass or less, more preferably 60% by mass or less, still more preferably 50% by mass or less. When the amount is within the range indicated above, the advantageous effect tends to be suitably achieved.

When the tire component rubber composition is a clinch apex rubber composition, the amount of the isoprene-based rubber based on 100% by mass of the rubber component is preferably 25% by mass or more, more preferably 40% by mass or more, still more preferably 45% by mass or more. The upper limit is not limited, and it is preferably 70% by mass or less, more preferably 60% by mass or less, still more preferably 50% by mass or less. When the amount is within the range indicated above, the advantageous effect tends to be suitably achieved.

When the tire component rubber composition is a base tread rubber composition, the amount of the isoprene-based rubber based on 100% by mass of the rubber component is not limited, and it is preferably 35% by mass or more, more preferably 55% by mass or more, still more preferably 60% by mass or more. The upper limit is not limited, and it is preferably 90% by mass or less, more preferably 80% by mass or less, still more preferably 70% by mass or less. When the amount is within the range indicated above, the advantageous effect tends to be suitably achieved.

The amount of the BR based on 100% by mass of the rubber component in the tire component rubber composition is preferably 5% by mass or more, more preferably 8% by mass or more, still more preferably 10% by mass or more, further preferably 20% by mass or more, further preferably 30% by mass or more, further preferably 35% by mass or more. The upper limit is not limited, and it is preferably 60% by mass or less, more preferably 55% by mass or less, still more preferably 50% by mass or less, further preferably 47.5% by mass or less, further preferably 45% by mass or less, further preferably 40% by mass or less. When the amount is within the range indicated above, the advantageous effect tends to be suitably achieved.

When the tire component rubber composition is a sidewall rubber composition, the amount of the BR based on 100% by mass of the rubber component is preferably 5% by mass or more, more preferably 8% by mass or more, still more preferably 10% by mass or more, further preferably 20% by mass or more. The upper limit is not limited, and it is preferably 50% by mass or less, more preferably 45% by mass or less, still more preferably 40% by mass or less. When the amount is within the range indicated above, the advantageous effect tends to be suitably achieved.

When the tire component rubber composition is a clinch apex rubber composition, the amount of the BR based on 100% by mass of the rubber component is preferably 25% by mass or more, more preferably 30% by mass or more, still more preferably 40% by mass or more, further preferably 45% by mass or more. The upper limit is not limited, and it is preferably 80% by mass or less, more preferably 70% by mass or less, still more preferably 60% by mass or less, further preferably 47.5% by mass or less. When the amount is within the range indicated above, the advantageous effect tends to be suitably achieved.

When the tire component rubber composition is a base tread rubber composition, the amount of the BR based on 100% by mass of the rubber component is preferably 5% by mass or more, more preferably 8% by mass or more, still more preferably 10% by mass or more. The upper limit is not limited, and it is preferably 50% by mass or less, more preferably 35% by mass or less, still more preferably 30% by mass or less. When the amount is within the range indicated above, the advantageous effect tends to be suitably achieved.

The total amount of the modified copolymer, the isoprene-based rubber, and the BR based on 100% by mass of the rubber component in the tire component rubber composition is preferably 50% by mass or more, more preferably 80% by mass or more, still more preferably 90% by mass or more, and may be 100% by mass.

(Filler)

The tire component rubber composition contains carbon black.

Examples of usable carbon black include N134, N110, N220, N234, N219, N339, N330, N326, N351, N550, and N762. These may be used alone or in combinations of two or more. Usable commercial products of carbon black are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

The nitrogen adsorption specific surface area ($N_2SA$) of the carbon black in the tire component rubber composition is preferably 10 $m^2/g$ or more, more preferably 20 $m^2/g$ or more, still more preferably 30 $m^2/g$ or more, further preferably 41 $m^2/g$ or more, while it is preferably 120 $m^2/g$ or less, more preferably 100 $m^2/g$ or less, still more preferably 90 $m^2/g$ or less, further preferably 71 $m^2/g$ or less. When the $N_2SA$ is within the range indicated above, the

advantageous effect tends to be better achieved.

Herein, the nitrogen adsorption specific surface area of the carbon black can be determined in accordance with JIS K 6217-2:2001.

When the tire component rubber composition is a side wall rubber composition or a clinch apex rubber composition, the nitrogen adsorption specific surface area ($N_2SA$) of the carbon black is preferably 10 $m^2$/g or more, more preferably 20 $m^2$/g or more, still more preferably 40 $m^2$/g or more, while it is preferably 100 $m^2$/g or less, more preferably 80 $m^2$/g or less, still more preferably 60 $m^2$/g or less. When the $N_2SA$ is within the range indicated above, the advantageous effect tends to be better achieved.

When the tire component rubber composition is a base tread rubber composition, the nitrogen adsorption specific surface area ($N_2SA$) of the carbon black is preferably 30 $m^2$/g or more, more preferably 50 $m^2$/g or more, still more preferably 70 $m^2$/g or more, while it is preferably 120 $m^2$/g or less, more preferably 100 $m^2$/g or less, still more preferably 90 $m^2$/g or less. When the $N_2SA$ is within the range indicated above, the advantageous effect tends to be better achieved.

The amount of the carbon black per 100 parts by mass of the rubber component in the tire component rubber composition is preferably 5 parts by mass or more, more preferably 10 parts by mass or more, still more preferably 15 parts by mass or more, further preferably 20 parts by mass or more, further preferably 30 parts by mass or more, further preferably 45 parts by mass or more, further preferably 50 parts by mass or more, further preferably 55 parts by mass or more, further preferably 60 parts by mass or more, further preferably 65 parts by mass or more. The upper limit is preferably 150 parts by mass or less, more preferably 120 parts by mass or less, still more preferably 100 parts by mass or less, further preferably 85 parts by mass or less, further preferably 80 parts by mass or less, further preferably 70 parts by mass or less. When the amount is within the range indicated above, the advantageous effect tends to be better achieved.

When the tire component rubber composition is a sidewall rubber composition, the amount of the carbon black per 100 parts by mass of the rubber component is preferably 10 parts by mass or more, more preferably 20 parts by mass or more, still more preferably 30 parts by mass or more, further preferably 40 parts by mass or more, further preferably 45 parts by mass or more, further preferably 50 parts by mass or more. The upper limit is preferably 100 parts by mass or less, more preferably 80 parts by mass or less, still more preferably 70 parts by mass or less, further preferably 60 parts by mass or less, further preferably 55 parts by mass or less. When the amount is within the range indicated above, the advantageous effect tends to be better achieved.

When the tire component rubber composition is a clinch apex rubber composition, the amount of the carbon black per 100 parts by mass of the rubber component is preferably 30 parts by mass or more, more preferably 50 parts by mass or more, still more preferably 55 parts by mass or more, further preferably 60 parts by mass or more. The upper limit is preferably 120 parts by mass or less, more preferably 100 parts by mass or less, still more preferably 85 parts by mass or less, further preferably 80 parts by mass or less, further preferably 70 parts by mass or less, further preferably 65 parts by mass or less. When the amount is within the range indicated above, the advantageous effect tends to be better achieved.

When the tire component rubber composition is a base tread rubber composition, the amount of the carbon black per 100 parts by mass of the rubber component is preferably 5 parts by mass or more, more preferably 10 parts by mass or more, still more preferably 15 parts by mass or more, further preferably 20 parts by mass or more, further preferably 30 parts by mass or more. The upper limit is preferably 90 parts by mass or less, more preferably 70 parts by mass or less, still more preferably 50 parts by mass or less. When the amount is within the range indicated above, the advantageous effect tends to be better achieved.

The tire component rubber composition desirably contains silica.

Examples of usable silica include dry silica (anhydrous silica) and wet silica (hydrous silica). Wet silica is preferred among these because it contains a large number of silanol groups. Usable commercial products are available from Degussa, Rhodia, Tosoh Silica Corporation, Solvay Japan, Tokuyama Corporation, etc.

The nitrogen adsorption specific surface area ($N_2SA$) of the silica is preferably 50 $m^2$/g or more, more preferably 120 $m^2$/g or more, still more preferably 150 $m^2$/g or more, particularly preferably 170 $m^2$/g or more, while it is preferably 250 $m^2$/g or less, more preferably 220 $m^2$/g or less, still more preferably 200 $m^2$/g or less. When the $N_2SA$ is within the range indicated above, the advantageous effect tends to be better achieved.

Herein, the $N_2SA$ of the silica is measured by a BET method in accordance with ASTM D3037-93.

The amount of silica per 100 parts by mass of the rubber component in the tire component rubber composition is preferably 1 part by mass or more, more preferably 3 parts by mass or more, still more preferably 5 parts by mass or more, further preferably 10 parts by mass or more, further preferably 15 parts by mass or more, further preferably 20 parts by mass or more, further preferably 30 parts by mass or more, further preferably 35 parts by mass or more. The upper limit is preferably 100 parts by mass or less, more preferably 70 parts by mass or less, still more preferably 60 parts by mass or less, further preferably 50 parts by mass or less. When the amount is within the range indicated above, tire performances such as wet grip performance tend to be better achieved.

When the tire component rubber composition is a side wall rubber composition or a clinch apex rubber composition, the amount of silica per 100 parts by mass of the rubber component is preferably 1 part by mass or more, more preferably 3 parts by mass or more, still more preferably 5 parts by mass or more. The upper limit is preferably 50

parts by mass or less, more preferably 30 parts by mass or less, still more preferably 20 parts by mass or less, further preferably 15 parts by mass or less. When the amount is within the range indicated above, tire performances such as wet grip performance tend to be better achieved.

When the tire component rubber composition is a base tread rubber composition, the amount of silica per 100 parts by mass of the rubber component is preferably 10 parts by mass or more, more preferably 20 parts by mass or more, still more preferably 25 parts by mass or more, further preferably 30 parts by mass or more, further preferably 35 parts by mass or more. The upper limit is preferably 80 parts by mass or less, more preferably 60 parts by mass or less, still more preferably 50 parts by mass or less. When the amount is within the range indicated above, tire performances such as wet grip performance tend to be better achieved.

When the tire component rubber composition contains silica, it may contain a silane coupling agent together with the silica.

The silane coupling agent may be any silane coupling agent conventionally used with silica in the rubber industry. Non-limiting examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more. Sulfide silane coupling agents and mercapto silane coupling agents are preferred among these.

The amount of silane coupling agents per 100 parts by mass of the silica in the tire component rubber composition is preferably 3 parts by mass or more, more preferably 6 parts by mass or more, still more preferably 8 parts by mass or more. The amount is preferably 20 parts by mass or less, more preferably 15 parts by mass or less.

The tire component rubber composition may contain different fillers other than silica and carbon black.

Examples of different fillers include those known in the rubber field, including inorganic fillers such as calcium carbonate, talc, alumina, cray, aluminum hydroxide, aluminum oxide, and mica; and hard-to-disperse fillers. These may be used alone or in combinations of two or more.

The amount of fillers (total amount of carbon black, silica, and different fillers) per 100 parts by mass of the rubber component in the tire component rubber composition is preferably 10 parts by mass or more, more preferably 25 parts by mass or more, still more preferably 30 parts by mass or more, further preferably 35 parts by mass or more, further preferably 40 parts by mass or more, further preferably 45 parts by mass or more, further preferably 50 parts by mass or more, further preferably 55 parts by mass or more, further preferably 60 parts by mass or more, further preferably 65 parts by mass or more. The upper limit is preferably 120 parts by mass or less, more preferably 90 parts by mass or less, still more preferably 85 parts by mass or less, further preferably 80 parts by mass or less, further preferably 75 parts by mass or less. When the amount is within the range indicated above, the advantageous effect tends to be better achieved.

When the tire component rubber composition is a sidewall rubber composition, the amount of fillers per 100 parts by mass of the rubber component is preferably 25 parts by mass or more, more preferably 30 parts by mass or more, still more preferably 50 parts by mass or more, further preferably 55 parts by mass or more. The upper limit is preferably 100 parts by mass or less, more preferably 90 parts by mass or less, still more preferably 80 parts by mass or less, further preferably 75 parts by mass or less. When the amount is within the range indicated above, the advantageous effect tends to be better achieved.

When the tire component rubber composition is a clinch apex rubber composition, the amount of fillers per 100 parts by mass of the rubber component is preferably 35 parts by mass or more, more preferably 40 parts by mass or more, still more preferably 55 parts by mass or more, further preferably 60 parts by mass or more, further preferably 65 parts by mass or more, further preferably 75 parts by mass or more, further preferably 80 parts by mass or more. The upper limit is preferably 110 parts by mass or less, more preferably 100 parts by mass or less, still more preferably 90 parts by mass or less, further preferably 85 parts by mass or less. When the amount is within the range indicated above, the advantageous effect tends to be better achieved.

When the tire component rubber composition is a base tread rubber composition, the amount of fillers per 100 parts by mass of the rubber component is preferably 25 parts by mass or more, more preferably 45 parts by mass or more, still more preferably 50 parts by mass or more. The upper limit is preferably 100 parts by mass or less, more preferably 80

parts by mass or less, still more preferably 75 parts by mass or less, further preferably 70 parts by mass or less. When the amount is within the range indicated above, the advantageous effect tends to be better achieved.

The silica content of the tire component rubber composition based on 100% by mass of fillers is preferably 3.0% by mass or higher, more preferably 5.0% by mass or higher, still more preferably 5.6% by mass or higher, further preferably 5.9% by mass or higher, further preferably 6.7% by mass or higher, further preferably 7.0% by mass or higher, further preferably 7.7% by mass or higher, further preferably 8.3% by mass or higher, further preferably 9.1% by mass or higher, further preferably 10.0% by mass or higher, further preferably 14.3% by mass or higher, further preferably 18.8% by mass or higher, further preferably 20.0% by mass or higher. The upper limit is preferably 90.0% by mass or lower, more preferably 80.0% by mass or lower, still more preferably 75.0% by mass or lower, further preferably 70.0% by mass or lower, further preferably 66.7% by mass or lower, further preferably 40.0% by mass or lower. When the amount is within the range indicated above, the advantageous effect tends to be better achieved.

When the tire component rubber composition is a sidewall rubber composition, the silica content based on 100% by mass of fillers is preferably 3.0% by mass or higher, more preferably 4.0% by mass or higher, still more preferably 5.0% by mass or higher, further preferably 6.7% by mass or higher. The upper limit is preferably 30.0% by mass or lower, more preferably 20.0% by mass or lower, still more preferably 10.0% by mass or lower, particularly preferably 9.1% by mass or lower. When the silica content is within the range indicated above, the advantageous effect tends to be better achieved.

When the tire component rubber composition is a clinch apex rubber composition, the silica content based on 100% by mass of fillers is preferably 3.0% by mass or higher, more preferably 4.0% by mass or higher, still more preferably 5.0% by mass or higher, further preferably 5.6% by mass or higher, further preferably 5.9% by mass or higher, further preferably 6.7% by mass or higher. The upper limit is preferably 25.0% by mass or lower, more preferably 18.8% by mass or lower, still more preferably 15.0% by mass or lower, further preferably 14.3% by mass or lower, further preferably 9.1% by mass or lower, further preferably 8.3% by mass or lower, further preferably 8.0% by mass or lower, particularly preferably 7.7% by mass or lower. When the silica content is within the range indicated above, the advantageous effect tends to be better achieved.

When the tire component rubber composition is a base tread rubber composition, the silica content based on 100% by mass of fillers is preferably 30.0% by mass or higher, more preferably 40.0% by mass or higher, still more preferably 50.0% by mass or higher, further preferably 60.0% by mass or higher, further preferably 66.7% by mass or higher, particularly preferably 70.0% by mass or higher. The upper limit is preferably 90.0% by mass or lower, more preferably 80.0% by mass or lower, still more preferably 75.0% by mass or lower. When the silica content is within the range indicated above, the advantageous effect tends to be better achieved.

(Plasticizer)

The tire component rubber composition desirably contains a plasticizer.

Herein, the term "plasticizer" refers to a material that can impart plasticity to rubber components. Examples include liquid plasticizers (plasticizers which are liquid at room temperature (25°C)) and resins (resins which are solid at room temperature (25°C)).

The amount of plasticizers (total amount of liquid plasticizers, resins, and other plasticizers) per 100 parts by mass of the rubber component in the tire component rubber composition is preferably 1 part by mass or more, more preferably 2 parts by mass or more, still more preferably 3 parts by mass or more, further preferably 5 parts by mass or more, further preferably 7 parts by mass or more, further preferably 8 parts by mass or more, further preferably 10 parts by mass or more, further preferably 12 parts by mass or more, further preferably 14 parts by mass or more. The upper limit is preferably 50 parts by mass or less, more preferably 30 parts by mass or less, still more preferably 27.5 parts by mass or less, further preferably 23 parts by mass or less, further preferably 20 parts by mass or less, further preferably 18 parts by mass or less. When the amount is within the range indicated above, the advantageous effect tends to be better achieved.

When the tire component rubber composition is a sidewall rubber composition, the amount of plasticizers per 100 parts by mass of the rubber component is preferably 1 part by mass or more, more preferably 3 parts by mass or more, still more preferably 5 parts by mass or more, further preferably 7 parts by mass or more, further preferably 10 parts by mass or more. The upper limit is preferably 50 parts by mass or less, more preferably 30 parts by mass or less, still more preferably 20 parts by mass or less. When the amount is within the range indicated above, the advantageous effect tends to be better achieved.

When the tire component rubber composition is a clinch apex rubber composition, the amount of plasticizers per 100 parts by mass of the rubber component is preferably 3 parts by mass or more, more preferably 5 parts by mass or more, still more preferably 8 parts by mass or more, further preferably 12 parts by mass or more, further preferably 14 parts by mass or more. The upper limit is preferably 50 parts by mass or less, more preferably 30 parts by mass or less, still more preferably 27.5 parts by mass or less, further preferably 23 parts by mass or less, further preferably 20 parts by mass or less, further preferably 18 parts by mass or less. When the amount is within the range indicated above, the advantageous effect tends to be better achieved.

When the tire component rubber composition is a base tread rubber composition, the amount of plasticizers per 100 parts by mass of the rubber component is preferably 1 part by mass or more, more preferably 2 parts by mass or more, still more preferably 3 parts by mass or more, further preferably 5 parts by mass or more, further preferably 8 parts by mass or more. The upper limit is preferably 50 parts by mass or less, more preferably 30 parts by mass or less, still more preferably 20 parts by mass or less. When the amount is within the range indicated above, the advantageous effect tends to be better achieved.

Non-limiting examples of liquid plasticizers (plasticizers which are liquid at room temperature (25°C)) usable in the tire component rubber composition include oils and liquid polymers (liquid resins, liquid diene polymers, liquid farnesene polymers, etc.).
These liquid plasticizers may be used alone or in combinations of two or more.

The amount of liquid plasticizers per 100 parts by mass of the rubber component in the tire component rubber composition is preferably 1 part by mass or more, more preferably 2 parts by mass or more, still more preferably 3 parts by mass or more, further preferably 5 parts by mass or more, further preferably 7 parts by mass or more, further preferably 8 parts by mass or more, further preferably 10 parts by mass or more, further preferably 12 parts by mass or more, further preferably 14 parts by mass or more. The upper limit is preferably 50 parts by mass or less, more preferably 30 parts by mass or less, still more preferably 27.5 parts by mass or less, further preferably 23 parts by mass or less, further preferably 20 parts by mass or less, further preferably 18 parts by mass or less. When the amount is within the range indicated above, the advantageous effect tends to be better achieved. The amount of liquid plasticizers includes the amount of oils in oil-extended rubbers. Here, the amount of oils described later is desirably within the range indicated above.

When the tire component rubber composition is a sidewall rubber composition, the amount of liquid plasticizers per 100 parts by mass of the rubber component is preferably 1 part by mass or more, more preferably 3 parts by mass or more, still more preferably 5 parts by mass or more, further preferably 7 parts by mass or more, further preferably 10 parts by mass or more. The upper limit is preferably 50 parts by mass or less, more preferably 30 parts by mass or less, still more preferably 20 parts by mass or less. When the amount is within the range indicated above, the advantageous effect tends to be better achieved. The amount of liquid plasticizers includes the amount of oils in oil-extended rubbers. Here, the amount of oils described later is desirably within the range indicated above.

When the tire component rubber composition is a clinch apex rubber composition, the amount of liquid plasticizers per 100 parts by mass of the rubber component is preferably 3 parts by mass or more, more preferably 5 parts by mass or more, still more preferably 8 parts by mass or more, further preferably 12 parts by mass or more, further preferably 14 parts by mass or more. The upper limit is preferably 50 parts by mass or less, more preferably 30 parts by mass or less, still more preferably 27.5 parts by mass or less, further preferably 23 parts by mass or less, further preferably 20 parts by mass or less, further preferably 18 parts by mass or less. When the amount is within the range indicated above, the advantageous effect tends to be better achieved. The amount of liquid plasticizers includes the amount of oils in oil-extended rubbers. Here, the amount of oils described later is desirably within the range indicated above.

When the tire component rubber composition is a base tread rubber composition, the amount of liquid plasticizers per 100 parts by mass of the rubber component is preferably 1 part by mass or more, more preferably 2 parts by mass or more, still more preferably 3 parts by mass or more, further preferably 5 parts by mass or more, further preferably 8 parts by mass or more. The upper limit is preferably 50 parts by mass or less, more preferably 30 parts by mass or less, still more preferably 20 parts by mass or less. When the amount is within the range indicated above, the advantageous effect tends to be better achieved. The amount of liquid plasticizers includes the amount of oils in oil-extended rubbers. Here, the amount of oils described later is desirably within the range indicated above.

Examples of oils include process oils, plant oils, and mixtures thereof. Examples of process oils include paraffinic process oils, aromatic process oils, and naphthenic process oils. Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group., Ltd., etc. Process oils, such as paraffinic process oils, aromatic process oils, and naphthenic process oils, and plant oils are preferred among these.

Examples of liquid resins include terpene resins (including terpene-phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of these resins are also usable.

Examples of liquid diene polymers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. These polymers may be modified at the chain end or backbone with a polar group. Hydrogenated products of

these polymers are also usable.

The term "liquid farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

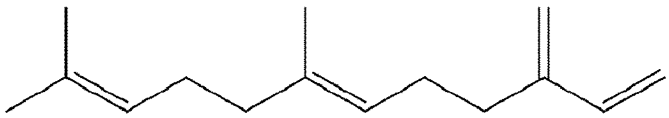

.

The liquid farnesene polymers may be either homopolymers of farnesene (farnesene homopolymers) or copolymers of farnesene and vinyl monomers (farnesene-vinyl monomer copolymers). These may be used alone or in combinations of two or more. Copolymers of farnesene and vinyl monomers are preferred among these.

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. These may be used alone or in combinations of two or more. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Liquid farnesene polymers having a weight average molecular weight (Mw) of 3000 to 300000 may be suitably used. The Mw of the liquid farnesene polymers is preferably 8000 or more, more preferably 10000 or more, while it is preferably 100000 or less, more preferably 60000 or less, still more preferably 50000 or less.

Examples of the resins (resins which are solid at room temperature (25°C)) usable in the tire component rubber composition include aromatic vinyl polymers, coumarone-indene resins, coumarone resins, indene resins, phenol resins, rosin resins, petroleum resins, terpene resins, and acrylic resins, all of which are solid at room temperature (25°C). These resins may be hydrogenated. These may be used alone or in combinations of two or more. Aromatic vinyl polymers, petroleum resins, and terpene resins are preferred among these.

The softening point of the resins is preferably 60°C or higher, more preferably 70°C or higher, still more preferably 80°C or higher. The upper limit is preferably 160°C or lower, more preferably 130°C or lower, still more preferably 115°C or lower. When the softening point is within the range indicated above, a higher advantageous effect tends to be achieved.

Here, the softening point of the resins is determined in accordance with JIS K 6220-1:2001 using a ring and ball softening point measuring apparatus, and the temperature at which the ball drops down is defined as the softening temperature. The softening point of the resins indicated above is usually higher by 50°C ± 5°C than the glass transition temperature of the resins.

The aromatic vinyl polymers refer to polymers containing aromatic vinyl monomers as structural units. Examples include resins produced by polymerizing α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced the reaction in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of these resins. DCPD resins or hydrogenated DCPD resins are preferred among these.

The terpene resins refer to polymers containing terpenes as structural units. Examples include polyterpene resins produced by polymerizing terpene compounds, and aromatic modified terpene resins produced by polymerizing terpene compounds and aromatic compounds. Hydrogenated products of these resins are also usable.

The polyterpene resins refer to resins produced by polymerizing terpene compounds. The terpene compounds refer to hydrocarbons having a composition represented by $(C_5H_8)_n$ or oxygen-containing derivatives thereof, each of which has a terpene skeleton and is classified as a monoterpene ($C_{10}H_{16}$), sesquiterpene ($C_{15}H_{24}$), diterpene ($C_{20}H_{32}$), or other terpenes. Examples of the terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, α-pinene and β-pinene, are classified into β-pinene resins mainly containing β-pinene and α-pinene resins mainly containing α-pinene, depending on the proportions of the components in the resins.

Examples of the aromatic modified terpene resins include terpene-phenol resins made from the above-mentioned terpene compounds and phenolic compounds, and terpene-styrene resins made from the above-mentioned terpene compounds and styrene compounds. Terpene-phenol-styrene resins made from the terpene compounds, phenolic compounds, and styrene compounds are also usable. Here, examples of the phenolic compounds include phenol, bisphenol A, cresol, and xylenol. Examples of the styrene compounds include styrene and α-methylstyrene.

The acrylic resins refer to polymers containing acrylic monomers as structural units. Examples include styrene acrylic resins such as those which contain carboxy groups and are produced by copolymerizing aromatic vinyl monomer components and acrylic monomer components. Solvent-free, carboxy group-containing styrene acrylic resins are suitable among these.

The solvent-free, carboxy group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5010166, and annual research report TREND 2000 issued by Toagosei Co., Ltd., vol. 3, pp. 42-45) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acid and (meth)acrylic acid derivatives such as (meth)acrylic acid esters (e.g., alkyl esters, aryl esters, and aralkyl esters, such as 2-ethylhexyl acrylate), (meth)acrylamide, and (meth)acrylamide derivatives. Here, the term "(meth)acrylic acid" is a general term for acrylic acid and methacrylic acid.

Examples of the aromatic vinyl monomer components of the acrylic resins include aromatic vinyls such as styrene, α-methylstyrene, vinyltoluene, vinylnaphthalene, divinylbenzene, trivinylbenzene, and divinylnaphthalene.

In addition to the (meth)acrylic acid or (meth)acrylic acid derivatives and aromatic vinyls, other monomer components may also be used as the monomer components of the acrylic resins.

The amount of the resins, if present, in the tire component rubber composition per 100 parts by mass of the rubber component is preferably 5 parts by mass or more, more preferably 10 parts by mass or more, still more preferably 15 parts by mass or more, while it is preferably 50 parts by mass or less, more preferably 30 parts by mass or less, still more preferably 25 parts by mass or less. When the amount is within the range indicated above, the advantageous effect tends to be better achieved.

The plasticizers may be commercially available from, for example, Maruzen Petrochemical Co., Ltd., Sumitomo Bakelite Co., Ltd., Yasuhara Chemical Co., Ltd., TOSOH, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The tire component rubber composition preferably contains an antioxidant from the standpoint of properties such as cracking resistance and ozone resistance.

Non-limiting examples of antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate] methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber component in the tire component rubber composition is preferably 0.2 parts by mass or more, more preferably 0.5 parts by mass or more. The amount is preferably 7.0 parts by mass or less, more preferably 4.0 parts by mass or less.

The tire component rubber composition may contain stearic acid.

The amount of stearic acid per 100 parts by mass of the rubber component in the tire component rubber composition is preferably 0.5 to 10 parts by mass, more preferably 0.5 to 5 parts by mass, still more preferably 2 to 3.5 parts by mass.

Here, conventionally known stearic acid may be used, including, for example, those available from NOF Corporation, Kao Corporation, FUJIFILM Wako Pure Chemical Corporation, Chiba Fatty Acid Co., Ltd., etc.

The tire component rubber composition may contain zinc oxide.

The amount of zinc oxide per 100 parts by mass of the rubber component in the tire component rubber composition is preferably 0.5 to 10 parts by mass, more preferably 1 to 5 parts by mass, still more preferably 2 to 2.5 parts by mass.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The tire component rubber composition may contain a wax.

The amount of waxes per 100 parts by mass of the rubber component in the tire component rubber composition is preferably 0.5 to 10 parts by mass, more preferably 1 to 5 parts by mass, still more preferably 1.5 to 3 parts by mass.

Any wax may be used, and examples include petroleum waxes, natural waxes, and synthetic waxes produced by purifying or chemically treating a plurality of waxes. These waxes may be used alone or in combinations of two or more.

Examples of petroleum waxes include paraffin waxes and microcrystalline waxes. Any natural wax derived from non-petroleum resources is usable. Examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of these waxes. Usable commercial products are available from, for example, Ouchi Shinko Chemical Industrial Co., Ltd., Nippon Seiro Co., Ltd., Seiko Chemical Co., Ltd., etc.

The tire component rubber composition may contain sulfur.

The amount of sulfur per 100 parts by mass of the rubber component in the tire component rubber composition is preferably 0.1 parts by mass or more, more preferably 0.5 parts by mass or more, still more preferably 0.7 parts by mass or more, further preferably 1.8 parts by mass or more. The amount is preferably 6.0 parts by mass or less, more preferably 4.0 parts by mass or less, still more preferably 3.0 parts by mass or less, further preferably 2.5 parts by mass or less.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The tire component rubber composition may contain a vulcanization accelerator.

The amount of vulcanization accelerators per 100 parts by mass of the rubber component in the tire component rubber composition is usually 0.3 to 10 parts by mass, preferably 0.5 to 7 parts by mass, more preferably 1 to 5 parts by mass, still more preferably 1.5 to 2 parts by mass.

Any type of vulcanization accelerator may be used, including generally-used vulcanization accelerators. Examples of vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide vulcanization accelerators and guanidine vulcanization accelerators are preferred among these.

In addition to the above-described components, the tire component rubber composition may appropriately contain additives usually used as needed in the application field, such as releasing agents and pigments.

The tire component rubber composition can be produced by known methods. For example, it can be produced by kneading the components using a rubber kneading machine such as an open roll mill or a Banbury mixer, optionally followed by crosslinking. The kneading conditions include a kneading temperature of usually 50°C to 200°C, preferably 80°C to 190°C, and the kneading time is usually 30 seconds to 30 minutes, preferably 1 minute to 30 minutes.

The tire component in the tire of the present invention satisfies the following formula (1):

$$(1)\ AE > 5.0$$

where AE denotes an acetone extractable content (% by mass) of the tire component.

The value on the right side of the formula (1) is preferably 7.0, more preferably 8.0, still more preferably 9.0, particularly preferably 10.0. The upper limit of AE is preferably 20.0% by mass or less, more preferably 18.0% by mass or less, still more preferably 17.0% by mass or less, further preferably 15.0% by mass or less, further preferably 14.0% by mass or less, further preferably 13.0% by mass or less, further preferably 12.0% by mass or less. When AE is within the range indicated above, the advantageous effect tends to be better achieved.

When the tire component is a sidewall, the sidewall desirably satisfies the following formula (1a):

$$(1a)\ AE > 5.0$$

where AE denotes an acetone extractable content (% by mass) of the sidewall.

The value on the right side of the formula (1a) is preferably 8.0, more preferably 9.0, still more preferably 10.0, particularly preferably 10.5. The upper limit of AE is preferably 20.0% by mass or less, more preferably 18.0% by mass or less, still more preferably 17.0% by mass or less, further preferably 12.9% by mass or less, further preferably 11.3% by mass or less. When AE is within the range indicated above, the advantageous effect tends to be better achieved.

When the tire component is a clinch apex, the clinch apex desirably satisfies the following formula (1b):

$$(1b)\ AE > 6.0$$

where AE denotes an acetone extractable content (% by mass) of the clinch apex.

The value on the right side of the formula (1b) is preferably 8.0, more preferably 10.0, still more preferably 12.0, particularly preferably 14.0. The upper limit of AE is preferably 20.0% by mass or less, more preferably 18.0% by mass or less, still more preferably 17.0% by mass or less, further preferably 14.9% by mass or less. When AE is within the range indicated above, the advantageous effect tends to be better achieved.

When the tire component is a base tread, the base tread desirably satisfies the following formula (1c):

$$(1c)\ AE > 5.0$$

where AE denotes an acetone extractable content (% by mass) of the base tread.

The value on the right side of the formula (1c) is preferably 7.0, more preferably 8.0, still more preferably 9.0, particularly preferably 10.0. The upper limit of AE is preferably 20.0% by mass or less, more preferably 18.0% by mass or less, still more preferably 17.0% by mass or less, further preferably 12.3% by mass or less, further preferably 12.2% by mass or less. When AE is within the range indicated above, the advantageous effect tends to be better achieved.

The acetone extractable content (AE) of the tire component is measured using a vulcanized rubber composition constituting the tire component as follows.

The acetone extractable content (AE, unit: % by mass in a specimen) of a tire component (specimen) is measured by a method for measuring the acetone extractable content in accordance with JIS K 6229:2015.

The specimen used in the measurement is collected from a component constituting the tire.

The acetone extractable content (AE) may be controlled by methods known by those skilled in the art. For example, AE tends to be increased by increasing the amount of plasticizers such as oils in the rubber composition.

The tire of the present invention satisfies at least one of the following formula (2) or the following formula (3), preferably both the formulas (2) and (3):

$$(2)\ Tw < 12.0$$

where Tw denotes a thickness (mm) of a surface rubber layer at a tire maximum width position,

$$(3)\ Tt < 12.0$$

where Tt denotes a thickness (mm) of a tread portion.

The value on the right side of the formula (2) is preferably 10.0, more preferably 9.0, still more preferably 8.0, particularly preferably 6.0. The lower limit of Tw is preferably 2.0 mm or more, more preferably 3.0 mm or more, still more preferably 4.0 mm or more. When Tw is within the range indicated above, the advantageous effect tends to be better achieved.

The value on the right side of the formula (3) is preferably 10.0, more preferably 9.0, still more preferably 8.0. The

lower limit of Tt is preferably 3.0 mm or more, more preferably 4.0 mm or more, still more preferably 5.0 mm or more. When Tt is within the range indicated above, the advantageous effect tends to be better achieved.

The term "tire maximum width position" refers to a pair of positions at which the width is the largest in the tire axis direction.

The term "surface rubber layer at a tire maximum width position" refers to a rubber layer which is a tire component defining a tire surface including the tire maximum width position, and it may correspond to a sidewall, a clinch apex, or the like depending on each tire.

The term "thickness (Tw) of a surface rubber layer at a tire maximum width position" refers to the thickness of the surface rubber layer in the tire axial direction at the tire maximum width position in a radial cross-section of the tire. The thickness of the surface rubber layer at the tire maximum width position is measured in the tire axis direction from the surface of the surface rubber layer at the tire maximum width position. Tw is a straight line distance in the tire axis direction from the surface, which defines the tire surface, of the surface rubber layer such as a sidewall or a clinch apex at the tire maximum width position to an interface, which is closest to the tire surface, of a different reinforcing layer containing fiber materials such as a carcass layer in a radial cross-section of the tire.

The term "thickness (Tt) of the tread portion" refers to the thickness of the tread portion on the tire equator in a radial cross-section of the tire. The thickness of the tread portion on the tire equator is measured along the tire equator from the outermost surface of the tread on the tire equator. Tt is a straight line distance from the tread surface to an interface, which is closest to the tire surface in the tire radial direction, of a different reinforcing layer containing fiber materials such as a belt layer or a carcass layer in a radial cross-section of the tire. When the tread has a groove on the equator, Tt is a straight line distance from an intersection of the tire equator and a straight line connecting the edges, which are on the outermost surface side in the tire radial direction, of the groove.

Herein, the dimensions of the tire, such as "thickness (Tw) of a surface rubber layer at a tire maximum width position" and "thickness (Tt) of a tread portion", are measured while the width between the bead portions of the tire is fixed to the normal rim width, unless otherwise stated. In the measurement of each dimension, a sample is cut from the tire in the tire radial direction, and the width between the bead edges on both sides of the sample is fixed to the normal rim width.

The term "normal rim" refers to a rim specified for each tire by the standard in a standard system including standards according to which the tire 1 is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organization (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, it will be followed. Moreover, for a tire which is not defined by any standard, it refers to a rim with the smallest diameter and, secondly, the narrowest width among the rims on which the tire can be mounted and can maintain the internal pressure, i.e., the rims that cause no air leakage between the rim and the tire.

When the sidewall includes the tire maximum width position, the sidewall desirably satisfies at least one of the following formula (2a) or the following formula (3a):

$$(2a)\ Tw < 10.0$$

where Tw denotes the thickness (mm) of the sidewall at the tire maximum width position,

$$(3a)\ Tt < 12.0$$

where Tt denotes a thickness (mm) of a tread portion.

The value on the right side of the formula (2a) is preferably 9.0, more preferably 8.0, still more preferably 6.0. The lower limit of Tw is preferably 2.0 mm or more, more preferably 3.0 mm or more, still more preferably 4.0 mm or more, further preferably 5.0 mm or more. When Tw is within the range indicated above, the advantageous effect tends to be better achieved.

The value on the right side of the formula (3a) is preferably 10.0, more preferably 9.0, still more preferably 8.0. The lower limit of Tt is preferably 3.0 mm or more, more preferably 4.0 mm or more, still more preferably 5.0 mm or more, further preferably 7.0 mm or more. When Tt is within the range indicated above, the advantageous effect tends to be better achieved.

When the clinch apex includes the tire maximum width position, the clinch apex desirably satisfies at least one of the following formula (2b) or the following formula (3b):

$$(2b)\ Tw < 10.0$$

where Tw denotes the thickness (mm) of the clinch apex at the tire maximum width position,

$$(3b)\ Tt < 12.0$$

where Tt denotes a thickness (mm) of a tread portion.

The value on the right side of the formula (2b) is preferably 9.0, more preferably 8.0, still more preferably 6.0. The lower limit of Tw is preferably 2.0 mm or more, more preferably 3.0 mm or more, still more preferably 4.0 mm or more, further preferably 4.5 mm or more, further preferably 5.0 mm or more. When Tw is within the range indicated above, the advantageous effect tends to be better achieved.

The value on the right side of the formula (3b) is preferably 10.0, more preferably 9.0, still more preferably 8.0. The lower limit of Tt is preferably 3.0 mm or more, more preferably 4.0 mm or more, still more preferably 5.0 mm or more, further preferably 5.5 mm or more, further preferably 7.0 mm or more. When Tt is within the range indicated above, the advantageous effect tends to be better achieved.

The tire of the present invention desirably satisfies the following formula:

$$AE/Tw > 1.0$$

where AE denotes an acetone extractable content (% by mass) of the tire component, and Tw denotes a thickness (mm) of a surface rubber layer at a tire maximum width position.

The value on the right side of the formula is preferably 1.3, more preferably 1.4, still more preferably 1.5. The upper limit of the value of AE/Tw is preferably 3.5 or less, more preferably 2.8 or less, still more preferably 2.6 or less, further preferably 2.5 or less, further preferably 2.4 or less, further preferably 2.3 or less, further preferably 2.1 or less, further preferably 2.0 or less, further preferably 1.9 or less, further preferably 1.8 or less, further preferably 1.7 or less. When the value is within the range indicated above, the advantageous effect tends to be better achieved.

When the tire component is a sidewall, the sidewall desirably satisfies the following formula:

$$AE/Tw > 1.0$$

where AE denotes an acetone extractable content (% by mass) of the sidewall, and Tw denotes a thickness (mm) of a surface rubber layer at a tire maximum width position.

The value on the right side of the formula is preferably 1.3, more preferably 1.4, still more preferably 1.5. The upper limit of the value of AE/Tw is preferably 2.6 or less, more preferably 2.5 or less, still more preferably 2.3 or less, further preferably 2.1 or less, further preferably 2.0 or less, further preferably 1.9 or less, further preferably 1.8 or less. When the value is within the range indicated above, the advantageous effect tends to be better achieved.

When the tire component is a clinch apex, the clinch apex desirably satisfies the following formula:

$$AE/Tw > 1.3$$

where AE denotes an acetone extractable content (% by mass) of the clinch apex, and Tw denotes a thickness (mm) of a surface rubber layer at a tire maximum width position.

The value on the right side of the formula is preferably 1.5, more preferably 1.7, still more preferably 1.8. The upper limit of the value of AE/Tw is preferably 3.5 or less, more preferably 2.8 or less, still more preferably 2.5 or less, further preferably 2.4 or less, further preferably 2.3 or less, further preferably 2.0 or less. When the value is within the range indicated above, the advantageous effect tends to be better achieved.

When the tire component is a base tread, the base tread desirably satisfies the following formula:

$$AE/Tw > 1.1$$

where AE denotes an acetone extractable content (% by mass) of the base tread, and Tw denotes a thickness (mm) of a surface rubber layer at a tire maximum width position.

The value on the right side of the formula is preferably 1.5, more preferably 1.6, still more preferably 1.7. The upper limit of the value of AE/Tw is preferably 2.5 or less, more preferably 2.4 or less, still more preferably 2.3 or less, further preferably 2.2 or less, further preferably 2.1 or less. When the value is within the range indicated above, the advantageous effect tends to be better achieved.

The tire of the present invention desirably satisfies the following formula:

$$AE/Tt > 0.5$$

where AE denotes an acetone extractable content (% by mass) of the tire component, and Tt denotes a thickness (mm) of a

tread portion.

The value on the right side of the formula is preferably 0.8, more preferably 1.0, still more preferably 1.1. The upper limit of the value of AE/Tt is preferably 2.4 or less, more preferably 2.1 or less, still more preferably 2.0 or less, further preferably 1.8 or less, further preferably 1.6 or less, further preferably 1.5 or less, further preferably 1.4 or less, further preferably 1.3 or less. When the value is within the range indicated above, the advantageous effect tends to be better achieved.

When the tire component is a sidewall, the sidewall desirably satisfies the following formula:

$$AE/Tt > 0.5$$

where AE denotes an acetone extractable content of the sidewall, and Tt denotes a thickness (mm) of a tread portion.

The value on the right side of the formula is preferably 0.8, more preferably 1.0, still more preferably 1.1. The upper limit of the value of AE/Tt is preferably 2.0 or less, more preferably 1.6 or less, still more preferably 1.5 or less, further preferably 1.4 or less, further preferably 1.3 or less. When the value is within the range indicated above, the advantageous effect tends to be better achieved.

When the tire component is a clinch apex, the clinch apex desirably satisfies the following formula:

$$AE/Tt > 0.8$$

where AE denotes an acetone extractable content (% by mass) of the clinch apex, and Tt denotes a thickness (mm) of a tread portion.

The value on the right side of the formula is preferably 1.1, more preferably 1.3, still more preferably 1.4. The upper limit of the value of AE/Tt is preferably 2.4 or less, more preferably 2.3 or less, still more preferably 2.1 or less, further preferably 2.0 or less, further preferably 1.8 or less, further preferably 1.7 or less. When the value is within the range indicated above, the advantageous effect tends to be better achieved.

When the tire component is a base tread, the base tread desirably satisfies the following formula:

$$AE/Tt > 0.6$$

where AE denotes an acetone extractable content (% by mass) of the base tread, and Tt denotes a thickness (mm) of a tread portion.

The value on the right side of the formula is preferably 0.9, more preferably 1.1, still more preferably 1.2. The upper limit of the value of AE/Tt is preferably 2.1 or less, more preferably 1.8 or less, still more preferably 1.6 or less, further preferably 1.5 or less, further preferably 1.4 or less. When the value is within the range indicated above, the advantageous effect tends to be better achieved.

The tire of the present invention desirably satisfies the following formula:

$$Pc/Tw > 1.5$$

where Pc denotes an amount (% by mass) of the copolymer having an ethylene unit and a styrene unit and having a modifying group capable of reacting with at least one of carbon black or silica based on 100% by mass of the rubber component in the tire component rubber composition constituting the tire component, and Tw denotes a thickness (mm) of a surface rubber layer at a tire maximum width position.

The value on the right side of the formula is preferably 1.7, more preferably 1.8, still more preferably 1.9. The upper limit of the value of Pc/Tw is preferably 6.3 or less, more preferably 6.0 or less, still more preferably 5.0 or less, further preferably 3.0 or less, further preferably 2.6 or less, further preferably 2.5 or less, further preferably 2.3 or less, further preferably 2.2 or less. When the value is within the range indicated above, the advantageous effect tends to be better achieved.

When the tire component is a sidewall, the sidewall desirably satisfies the following formula:

$$Pc/Tw > 1.5$$

where Pc denotes an amount (% by mass) of the copolymer having an ethylene unit and a styrene unit and having a modifying group capable of reacting with at least one of carbon black or silica based on 100% by mass of the rubber component in a sidewall rubber composition constituting the sidewall, and Tw denotes a thickness (mm) of a surface rubber layer at a tire maximum width position.

The value on the right side of the formula is preferably 1.7, more preferably 1.8, still more preferably 1.9. The

upper limit of the value of Pc/Tw is preferably 6.0 or less, more preferably 3.0 or less, still more preferably 2.5 or less, further preferably 2.3 or less. When the value is within the range indicated above, the advantageous effect tends to be better achieved.

When the tire component is a clinch apex, the clinch apex desirably satisfies the following formula:

$$Pc/Tw > 1.5$$

where Pc denotes an amount (% by mass) of the copolymer having an ethylene unit and a styrene unit and having a modifying group capable of reacting with at least one of carbon black or silica based on 100% by mass of the rubber component in a clinch apex rubber composition constituting the clinch apex, and Tw denotes a thickness (mm) of a surface rubber layer at a tire maximum width position.

The value on the right side of the formula is preferably 1.7, more preferably 1.8, still more preferably 1.9. The upper limit of the value of Pc/Tw is preferably 6.3 or less, more preferably 5.0 or less, still more preferably 3.0 or less, further preferably 2.6 or less, further preferably 2.5 or less, further preferably 2.3 or less, further preferably 2.2 or less. When the value is within the range indicated above, the advantageous effect tends to be better achieved.

When the tire component is a base tread, the base tread desirably satisfies the following formula:

$$Pc/Tw > 1.5$$

where Pc denotes an amount (% by mass) of the copolymer having an ethylene unit and a styrene unit and having a modifying group capable of reacting with at least one of carbon black or silica based on 100% by mass of the rubber component in a base tread rubber composition constituting the base tread, and Tw denotes a thickness (mm) of a surface rubber layer at a tire maximum width position.

The value on the right side of the formula is preferably 1.7, more preferably 1.8, still more preferably 1.9. The upper limit of the value of Pc/Tw is preferably 6.0 or less, more preferably 3.0 or less, still more preferably 2.5 or less, further preferably 2.3 or less. When the value is within the range indicated above, the advantageous effect tends to be better achieved.

The tire of the present invention desirably satisfies the following formula:

$$Pc/Tt > 0.9$$

where Pc denotes an amount (% by mass) of the copolymer having an ethylene unit and a styrene unit and having a modifying group capable of reacting with at least one of carbon black or silica based on 100% by mass of the rubber component in the tire component rubber composition constituting the tire component, and Tt denotes a thickness (mm) of a tread portion.

The value on the right side of the formula is preferably 1.1, more preferably 1.2, still more preferably 1.3. The upper limit of the value of Pc/Tt is preferably 4.3 or less, more preferably 3.6 or less, still more preferably 2.5 or less, further preferably 2.3 or less, further preferably 2.1 or less, further preferably 2.0 or less, further preferably 1.8 or less, further preferably 1.6 or less. When the value is within the range indicated above, the advantageous effect tends to be better achieved.

When the tire component is a sidewall, the sidewall desirably satisfies the following formula:

$$Pc/Tt > 0.9$$

where Pc denotes an amount (% by mass) of the copolymer having an ethylene unit and a styrene unit and having a modifying group capable of reacting with at least one of carbon black or silica based on 100% by mass of the rubber component in a sidewall rubber composition constituting the sidewall, and Tt denotes a thickness (mm) of a tread portion.

The value on the right side of the formula is preferably 1.1, more preferably 1.2, still more preferably 1.3. The upper limit of the value of Pc/Tt is preferably 4.3 or less, more preferably 2.5 or less, still more preferably 2.0 or less, further preferably 1.8 or less. When the value is within the range indicated above, the advantageous effect tends to be better achieved.

When the tire component is a clinch apex, the clinch apex desirably satisfies the following formula:

$$Pc/Tt > 0.9$$

where Pc denotes an amount (% by mass) of the copolymer having an ethylene unit and a styrene unit and having a modifying group capable of reacting with at least one of carbon black or silica based on 100% by mass of the rubber

component in a clinch apex rubber composition constituting the clinch apex, and Tt denotes a thickness (mm) of a tread portion.

The value on the right side of the formula is preferably 1.1, more preferably 1.2, still more preferably 1.3. The upper limit of the value of Pc/Tt is preferably 3.6 or less, more preferably 2.5 or less, still more preferably 2.3 or less, further preferably 2.1 or less, further preferably 2.0 or less, further preferably 1.8 or less, further preferably 1.6 or less. When the value is within the range indicated above, the advantageous effect tends to be better achieved.

When the tire component is a base tread, the base tread desirably satisfies the following formula:

$$Pc/Tt > 0.9$$

where Pc denotes an amount (% by mass) of the copolymer having an ethylene unit and a styrene unit and having a modifying group capable of reacting with at least one of carbon black or silica based on 100% by mass of the rubber component in a base tread rubber composition constituting the base tread, and Tt denotes a thickness (mm) of a tread portion.

The value on the right side of the formula is preferably 1.1, more preferably 1.2, still more preferably 1.3. The upper limit of the value of Pc/Tt is preferably 4.3 or less, more preferably 2.5 or less, still more preferably 2.0 or less, further preferably 1.8 or less. When the value is within the range indicated above, the advantageous effect tends to be better achieved.

The tire of the present invention desirably satisfies the following formula:

$$Fc/Tw > 6.0$$

where Fc denotes an amount (parts by mass) of a filler per 100 parts by mass of the rubber component in the tire component rubber composition constituting the tire component, and Tw denotes a thickness (mm) of a surface rubber layer at a tire maximum width position.

The value on the right side of the formula is preferably 7.0, more preferably 8.0, still more preferably 9.0. The upper limit of the value of Fc/Tw is preferably 20.0 or less, more preferably 17.0 or less, still more preferably 16.0 or less, further preferably 15.0 or less, further preferably 13.8 or less, further preferably 13.0 or less, further preferably 12.2 or less, further preferably 12.0 or less, further preferably 11.0 or less, further preferably 10.8 or less. When the value is within the range indicated above, the advantageous effect tends to be better achieved.

When the tire component is a sidewall, the sidewall desirably satisfies the following formula:

$$Fc/Tw > 7.0$$

where Fc denotes an amount (parts by mass) of a filler per 100 parts by mass of the rubber component in a sidewall rubber composition constituting the sidewall, and Tw denotes a thickness (mm) of a surface rubber layer at a tire maximum width position.

The value on the right side of the formula is preferably 8.0, more preferably 9.0, still more preferably 10.0. The upper limit of the value of Fc/Tw is preferably 18.0 or less, more preferably 15.0 or less, still more preferably 13.0 or less. When the value is within the range indicated above, the advantageous effect tends to be better achieved.

When the tire component is a clinch apex, the clinch apex desirably satisfies the following formula:

$$Fc/Tw > 8.0$$

where Fc denotes an amount (parts by mass) of a filler per 100 parts by mass of the rubber component in a clinch apex rubber composition constituting the clinch apex, and Tw denotes a thickness (mm) of a surface rubber layer at a tire maximum width position.

The value on the right side of the formula is preferably 10.0, more preferably 11.0, still more preferably 12.0. The upper limit of the value of Fc/Tw is preferably 18.0 or less, more preferably 16.0 or less, still more preferably 15.0 or less, further preferably 14.0 or less, further preferably 13.8 or less. When the value is within the range indicated above, the advantageous effect tends to be better achieved.

When the tire component is a base tread, the base tread desirably satisfies the following formula:

$$Fc/Tw > 6.0$$

where Fc denotes an amount (parts by mass) of a filler per 100 parts by mass of the rubber component in a base tread rubber composition constituting the base tread, and Tw denotes a thickness (mm) of a surface rubber layer at a tire

maximum width position.

The value on the right side of the formula is preferably 7.0, more preferably 8.0, still more preferably **9.0.** The upper limit of the value of Fc/Tw is preferably 17.0 or less, more preferably 15.0 or less, still more preferably 14.0 or less, further preferably 12.0 or less. When the value is within the range indicated above, the advantageous effect tends to be better achieved.

The tire of the present invention desirably satisfies the following formula:

$$Fc/Tt > 3.2$$

where Fc denotes an amount (parts by mass) of a filler per 100 parts by mass of the rubber component in the tire component rubber composition constituting the tire component, and Tt denotes a thickness (mm) of a tread portion.

The value on the right side of the formula is preferably 5.0, more preferably 6.0, still more preferably 6.5. The upper limit of the value of Fc/Tt is preferably 17.0 or less, more preferably 12.9 or less, still more preferably 12.1 or less, further preferably 12.0 or less, further preferably 11.0 or less, further preferably 10.7 or less, further preferably 10.0 or less, further preferably 9.3 or less, further preferably 8.6 or less, further preferably 8.1 or less, further preferably 7.9 or less. When the value is within the range indicated above, the advantageous effect tends to be better achieved.

When the tire component is a sidewall, the sidewall desirably satisfies the following formula:

$$Fc/Tt > 3.2$$

where Fc denotes an amount (parts by mass) of a filler per 100 parts by mass of the rubber component in a sidewall rubber composition constituting the sidewall, and Tt denotes a thickness (mm) of a tread portion.

The value on the right side of the formula is preferably 5.0, more preferably 7.0, still more preferably 7.5. The upper limit of the value of Fc/Tt is preferably 15.0 or less, more preferably 10.7 or less, still more preferably 10.0 or less, further preferably 9.0 or less. When the value is within the range indicated above, the advantageous effect tends to be better achieved.

When the tire component is a clinch apex, the clinch apex desirably satisfies the following formula:

$$Fc/Tt > 3.2$$

where Fc denotes an amount (parts by mass) of a filler per 100 parts by mass of the rubber component in a clinch apex rubber composition constituting the clinch apex, and Tt denotes a thickness (mm) of a tread portion.

The value on the right side of the formula is preferably 6.5, more preferably 8.4, still more preferably 8.9. The upper limit of the value of Fc/Tt is preferably 16.4 or less, more preferably 12.9 or less, still more preferably 12.1 or less, further preferably 11.4 or less, further preferably 10.7 or less, further preferably 10.4 or less, further preferably 10.0 or less. When the value is within the range indicated above, the advantageous effect tends to be better achieved.

When the tire component is a base tread, the base tread desirably satisfies the following formula:

$$Fc/Tt > 3.2$$

where Fc denotes an amount (parts by mass) of a filler per 100 parts by mass of the rubber component in a base tread rubber composition constituting the base tread, and Tt denotes a thickness (mm) of a tread portion.

The value on the right side of the formula is preferably 4.2, more preferably 6.2, still more preferably 6.5. The upper limit of the value of Fc/Tt is preferably 14.2 or less, more preferably 10.7 or less, still more preferably 9.2 or less, further preferably 8.2 or less. When the value is within the range indicated above, the advantageous effect tends to be better achieved.

The tire of the present invention desirably satisfies the following formula:

$$D < 11.5$$

where D denotes a groove depth (mm) of a circumferential groove in a tread portion.

The value on the right side of the formula is preferably 11.0, more preferably 9.0, still more preferably 8.0. The lower limit of D is preferably 3.0 mm or more, more preferably 4.0 mm or more, still more preferably 5.0 mm or more, further preferably 5.5 mm or more, further preferably 6.5 mm or more. When D is within the range indicated above, the advantageous effect tends to be better achieved.

Herein, the term "groove depth D of a circumferential groove" refers to a distance measured along the normal of a plane extended from a ground contact face defining the outermost face of the tread. The groove depth is a distance from a

plane extended from the plane defining the ground contact face to the bottom of the deepest groove, i.e., the largest distance among the groove depths of circumferential grooves provided.

The tire of the present invention desirably satisfies the following formula:

$$AE/D > 0.7$$

where AE denotes an acetone extractable content (% by mass) of the tire component, and D denotes a groove depth (mm) of a circumferential groove in a tread portion.

The value on the right side of the formula is preferably 1.1, more preferably 1.2, still more preferably 1.7, particularly preferably 2.0. The upper limit of the value of AE/D is preferably 3.0 or less, more preferably 2.8 or less, still more preferably 2.6 or less, further preferably 2.5 or less, further preferably 2.4 or less, further preferably 2.3 or less. When the value is within the range indicated above, the advantageous effect tends to be better achieved.

The tire of the present invention desirably satisfies the following formula:

$$Pc/D > 0.5$$

where Pc denotes an amount (% by mass) of the copolymer having an ethylene unit and a styrene unit and having a modifying group capable of reacting with at least one of carbon black or silica based on 100% by mass of the rubber component in the tire component rubber composition constituting the tire component, and D denotes a groove depth (mm) of a circumferential groove in a tread portion.

The value on the right side of the formula is preferably 1.0, more preferably 1.2, still more preferably 1.7, particularly preferably 1.9. The upper limit of the value of Pc/D is preferably 6.0 or less, more preferably 3.1 or less, still more preferably 3.0 or less, further preferably 2.8 or less, further preferably 2.6 or less, further preferably 2.3 or less, further preferably 2.2 or less. When the value is within the range indicated above, the advantageous effect tends to be better achieved.

The tire of the present invention desirably satisfies the following formula:

$$Fc/D > 3.5$$

where Fc denotes an amount (parts by mass) of a filler per 100 parts by mass of the rubber component in the tire component rubber composition constituting the tire component, and D denotes a groove depth (mm) of a circumferential groove in a tread portion.

The value on the right side of the formula is preferably 4.8, more preferably 7.5, still more preferably 9.5, particularly preferably 10.0. The upper limit of the value of Fc/D is preferably 15.0 or less, more preferably 14.0 or less, still more preferably 13.0 or less, further preferably 12.5 or less, further preferably 11.3 or less. When the value is within the range indicated above, the advantageous effect tends to be better achieved.

An exemplary embodiment of the tire of the present invention will be described below with reference to drawings. Yet, the present invention is not limited to the embodiment.

FIG. 1 shows an example of a tire in which a sidewall corresponds to a surface rubber layer including the tire maximum width position M. In FIG. 1, the vertical direction corresponds to the radial direction of a tire 2, the horizontal direction corresponds to the axial direction of the tire 2, and the direction perpendicular to the paper corresponds to the circumferential direction of the tire 2. The tire 2 is horizontally symmetrical. A tread portion 4 includes a cap layer 30 and a base layer 28 (also referred to as base tread).

Although FIG. 1 shows an example of the two-layer tread portion 4 consisting of the cap layer 30 and the base layer 28, the tread portion may be a single-layer tread or a tread including three or more layers.

In the tire 2, each sidewall 6 extends substantially inwardly in the radial direction from an end of the tread 4. The radially outer portion of the sidewall 6 is bonded to the tread 4. The radially inner portion of the sidewall 6 is bonded to a clinch 10 (also referred to as clinch apex). The sidewall 6 can prevent damage to a carcass 14. The sidewall 6 may be bonded to an edge of the tread 4 such that an outer edge of the sidewall 6 in the tire radial direction overlaps an outer side of the tread 4 in the tire radial direction.

In the tire 2 in FIG. 1, both the tire components of the base layer 28 and the sidewall 6 include the tire component rubber composition.

In FIG. 1, each wing 8 is located between the tread portion 4 and the sidewall 6. The wing 8 is bonded to both the tread portion 4 and the sidewall 6.

Each clinch 10 is located substantially radially inward of the sidewall 6. The clinch 10 is located axially outward from a bead 12 and the carcass 14.

Each bead 12 is located axially inward of the clinch 10. Each bead 12 includes a core 32 and an apex 34 that

radially outwardly extends from the core 32. The core 32 desirably has a ring shape and contains a wound non-stretchable wire. The apex 34 is radially outwardly tapered.

The carcass 14 includes a carcass ply 36. Although the carcass 14 in the tire 2 includes one carcass ply 36, the carcass 14 may include two or more carcass plies.

In the tire 2, the carcass ply 36 extends between the beads 12 on opposite sides along the tread 4 and the sidewalls 6. The carcass ply 36 is folded around each core 32 from the inside to the outside in the axial direction. Due to this folding, the carcass ply 36 is provided with a main portion 36a and a pair of folded portions 36b. Namely, the carcass ply 36 includes the main portion 36a and the pair of folded portions 36b.

Though not shown, the carcass ply 36 desirably includes a large number of parallel cords and a topping rubber. The absolute value of the angle of each cord to the equator is suitably from 75° to 90°. In other words, this carcass 14 preferably has a radial structure.

In FIG. 1, a belt layer 16 is located radially inward of the tread 4. The belt layer 16 is stacked on the carcass 14. The belt layer 16 reinforces the carcass 14. The belt layer 16 consists of an interior layer 38 and an exterior layer 40. As is clear from FIG. 1, the interior layer 38 is desirably slightly wider in the axial direction than the exterior layer 40. In the tire 2, the axial width of the belt layer 16 is preferably at least 0.6 times and preferably not more than 0.9 times the cross-sectional width of the tire 2.

Here, the term "cross-sectional width of the tire" refers to the width of the tire mounted on a normal rim with an internal pressure equal to atmospheric pressure and is determined by excluding the patterns, letters, and the like on the sides of the tire from the straight line distance between the sidewalls (the total width of the tire) including all the patterns, letters, and the like on the sides of the tire.

Though not shown, the interior layer 38 and the exterior layer 40 each desirably include a large number of parallel cords and a topping rubber. In other words, the belt layer 16 contains a large number of parallel cords. Each cord is tilted relative to the equator. The absolute value of the tilt angle is generally at least 10° and not greater than 35°. The tilt direction of the cords in the interior layer 38 relative to the equator is opposite to the tilt direction of the cords in the exterior layer 40 relative to the equator.

In the tire 2 in FIG. 1, both the tire components of the base layer 28 and the sidewall 6 include the tire component rubber composition. The base layer 28 and the sidewall 6 desirably satisfy the formula (1): $AE > 5.0$.

In FIG. 1, a band 18 is located radially outward of the belt layer 16. The band 18 has a width that is equal to the width of the belt layer 16 in the axial direction. The band 18 may be wider than the belt layer 16.

Though not shown, the band 18 desirably includes cords and a topping rubber. The cords are spirally wound. This band 18 has what is called a jointless structure. The cords extend substantially in the circumferential direction. The angle of the cords to the circumferential direction is preferably 5° or smaller or even 2° or smaller. As the belt layer 16 is restrained by these cords, lifting of the belt layer 16 is suppressed.

In FIG. 1, the belt layer 16 and the band 18 form a reinforcement layer. The reinforcement layer may be formed only of the belt layer 16.

The tire 2 in FIG. 1 has the tire maximum width position M on the surface of the sidewall 6.

In FIG. 1, the thickness Tw of the sidewall 6 corresponding to a surface rubber layer at the tire maximum width position M refers to a straight line distance in the tire axis direction from the tire maximum width position M on the tire outermost surface of the sidewall 6 to an interface, which is on the tire outermost surface side, of the carcass 14 in a radial cross-section of the tire.

FIG. 2 shows an enlarged view of the tread portion 4 and its vicinity in FIG. 1.

The tire in FIG. 2 has grooves 26 (one is on the tire equator CL in FIG. 2) on a tread surface 24. In this case, the thickness (Tt) of a tread portion refers to a thickness on the tire equator from a plane defined by a straight line connecting the edges, which are on the outermost surface side in the tire radial direction, of the groove 26, and the thickness is measured along the normal of the tread surface 24 on the tire equator in a radial cross-section of the tire. Specifically, the thickness refers to a straight line distance in the tire radial direction from a straight line connecting the edges of the groove 26 on the tire equator to an interface, which is on the tire outermost surface side, of the band 18.

In the tire 2 in FIG. 1, the acetone extractable content AE of the tire component rubber composition constituting the base layer 28 and the sidewall 6, the amount Pc of the copolymer having an ethylene unit and a styrene unit and having a modifying group capable of reacting with at least one of carbon black or silica, the amount Fc of fillers, the thickness Tw of the sidewall 6 at the tire maximum width position, and the thickness Tt of a tread portion desirably satisfy the above-described formulas.

An innerliner 20 is located inward of the carcass 14. The innerliner 20 is bonded to the inner surface of the carcass 14. The base material rubber of the innerliner 20 is typically a butyl rubber or a halogenated butyl rubber. The innerliner 20 maintains the internal pressure of the tire **2.**

Each chafer 22 is located near the bead 12. In this embodiment, the chafer 22 desirably includes a rubber and a fabric impregnated with the rubber. The chafer 22 may be integrated with the clinch 10.

In the tire 2, the tread 4 has the grooves 26 including main grooves 42. As shown in FIG. 1, the tread 4 has a

plurality of, specifically three, main grooves 42 engraved thereon. The main grooves 42 are positioned at intervals in the axial direction. As the three main grooves 42 are engraved on the tread 4, the tread 4 is provided with four ribs 44 extending in the circumferential direction. In other words, each main groove 42 is between one rib 44 and another rib 44.

The main grooves 42 extend in the circumferential direction. The main grooves 42 are continuous in the circumferential direction without interruption. The main grooves 42 promote drainage of water present between the road surface and the tire 2 in rainy weather, for example. Thus, the tire 2 can sufficiently come in contact with the road surface even when the road surface is wet.

In FIG. 2, D indicates a main groove depth of each circumferential main groove 42 in the tread 4.

The main groove depth D, the acetone extractable content AE of the tire component rubber composition constituting the base layer 28 and the sidewall 6, Pc, and Fc desirably satisfy the above-described formulas.

FIG. 3 shows an example of a tire in which a clinch apex corresponds to a surface rubber layer including the tire maximum width position M. In FIG. 3, the vertical direction corresponds to the radial direction of a tire 2, the horizontal direction corresponds to the axial direction of the tire 2, and the direction perpendicular to the paper corresponds to the circumferential direction of the tire 2. A tread portion 4 includes a cap layer 30 and a base layer 28 (also referred to as base tread).

The embodiment of the tire 2 in FIG. 3 differs from that in FIG. 1 in that a clinch 10 (also referred to as clinch apex) corresponds to a surface rubber layer at the tire maximum width position M and that both the tire components of the base layer 28 and the clinch 10 include the tire component rubber composition.

The base layer 28 and the clinch 10 in the tire 2 in FIG. 3 desirably satisfy the formula (1): AE > 5.0.

The tire 2 in FIG. 3 has the tire maximum width position M on the surface of the clinch 10.

In FIG. 3, the thickness Tw of the clinch 10 corresponding to a surface rubber layer at the tire maximum width position M refers to a straight line distance in the tire axis direction from the tire maximum width position M on the tire outermost surface of the clinch 10 to an interface, which is on the tire outermost surface side, of the carcass 14 in a radial cross-section of the tire.

FIG. 2 corresponds to an enlarged schematic view of the tread portion 4 and its vicinity in FIG. 3. In the tire in FIG. 3, the thickness (Tt) of a tread portion and the main groove depth (D) of the circumferential main grooves 42 are measured as described above.

In the tire 2 in FIG. 3, the acetone extractable content AE of the tire component rubber composition constituting the base layer 28 and the clinch 10, the amount Pc of the copolymer having an ethylene unit and a styrene unit and having a modifying group capable of reacting with at least one of carbon black or silica, the amount Fc of fillers, the thickness Tw of the clinch 10 at the tire maximum width position, and the thickness Tt of a tread portion desirably satisfy the above-described formulas.

The main groove depth D of the circumferential grooves 42 in the tread 4, the acetone extractable content AE of the tire component rubber composition constituting the base layer 28 and the clinch 10, Pc, and Fc desirably satisfy the above-described formulas.

## EXAMPLES

Examples (working examples) which are considered preferable to implement the present invention are described below. Yet, the scope of the invention is not limited to the examples.

A modified hydrogenated styrene-butadiene copolymer is produced and evaluated by the methods described below. Table 1 shows the results.

<Method of evaluating copolymer>

(Weight average molecular weight)

A chromatogram of the polymer as a sample is obtained under the below-described specific measurement conditions using a GPC analyzer (trade name "HLC-8320GPC", TOSOH) with three connected columns filled with polystyrene gel as a packing agent and an RI detector (trade name "HLC8020", TOSOH). The weight average molecular weight (Mw) is determined based on a calibration curve obtained using a standard polystyrene.

[Specific measurement conditions]

GPC analyzer: trade name "HLC-8320GPC", TOSOH
Eluent: Tetrahydrofuran (THF) containing 5 mmol/L triethylamine

Guard column: "TSKguardcolumn SuperMP (HZ)-H", TOSOH
Column: "TSKgel SuperMultipore HZ-H", TOSOH, three pieces are connected in use
Oven temperature: 40°C
Flow rate: 0.35 mL/min
Sample: A measurement solution is prepared by dissolving 10 mg of a measurement sample in 10 mL of THF. An amount of 10 μL of the measurement solution is placed in the GPC analyzer.

(Bonded styrene content)

An amount of 100 mg of the polymer as a sample is dissolved in chloroform to prepare a total 100 mL of measurement sample.
The bonded styrene content (% by mass) per 100% by mass of the polymer as a sample is determined from the absorption by the phenyl group of styrene at a UV absorption wavelength (about 254 nm) using a spectrophotometer "UV-2450" (Shimadzu Corporation) as a measurement device.

(Microstructure of butadiene moiety (1,2-vinyl bond content))

A measurement sample is prepared by dissolving 50 mg of the polymer as a sample in 10 mL of carbon disulfide.
The infrared spectrum of the measurement sample in the range of 600 to 1000 $cm^{-1}$ is measured using a solution cell. The microstructure of the butadiene moiety, specifically 1,2-vinyl bond content (mol%), is determined from the absorbance at a predetermined wavenumber by the equations in Hampton's method (method described in R. R. Hampton, Analytical Chemistry 21, 923 (1949)) using a Fourier-transform infrared spectrometer "FT-IR230" (JASCO) as a measurement device.
Here, the "amount of vinyl units and butylene units" before hydrogenation corresponds to the "1,2-vinyl bond content", and the values thereof are the same.
Thus, the "amount of vinyl units and butylene units" in Table 1 is equal to the 1,2-vinyl bond content before hydrogenation.

(Degree of hydrogenation of polymer, ethylene structure content of polymer)

The polymer as a sample is subjected to $^1$H-NMR analysis to measure the degree of hydrogenation and the ethylene structure content of the polymer. The $^1$H-NMR analysis conditions are as described below.

<Measurement conditions>

Measurement device: JNM-LA400 (JEOL)
Solvent: deuterated chloroform
Measurement sample: rubber-like polymer
Sample concentration: 50 mg/mL
Observation frequency: 400 MHz
Chemical shift standard: tetramethylsilane (TMS)
Pulse delay: 2.904 sec
Number of scan: 64
Pulse width: 45°
Measurement temperature: 26°C

(Iodine value of polymer)

The iodine value is measured as follows.
The sample is dissolved in cyclohexane. To the solution is added an iodine monochloride solution. After leaving the solution mixture in the dark, potassium iodide and water are added thereto. The solution is titrated with sodium thiosulfate and, when the solution becomes light yellow, a starch solution is added to the solution. The titration is continued until the blue color disappears. Accordingly, the iodine value is determined.

<Production of modified hydrogenated styrene-butadiene copolymer>

(Preparation of hydrogenation catalyst)

The hydrogenation catalyst used to produce modified hydrogenated styrene-butadiene copolymers in the following production examples is prepared as described below.

A nitrogen-purged reaction vessel is charged with 1 L of dried and purified cyclohexane, and then 100 mmol of bis(η5- cyclopentadienyl)titanium dichloride is added. While sufficiently stirring the mixture, a n-hexane solution containing 200 mmol of trimethylaluminum is added, followed by reaction at room temperature for about three days, whereby a hydrogenation catalyst is obtained.

(Production Example 1)

A temperature-controllable autoclave having an inner volume of 40 L and equipped with a stirrer and a jacket is used as a reactor, and impurities are removed in advance. To the reactor are added 2700 g of 1,3-butadiene, 300 g of styrene, 21000 g of cyclohexane, and 30 mmol of tetrahydrofuran (THF) and 11.6 mmol of 2,2-bis(2-oxolanyl)propane as polar substances. The temperature inside the reactor is maintained at 43°C.

An amount of 68.0 mmol of n-butyllithium as a polymerization initiator is supplied to the reactor.

After the polymerization reaction starts, the temperature inside the reactor begins to rise due to the heat generated by polymerization. Two minutes after the reaction temperature inside the reactor finally reaches its peak, 13.6 mmol of bis(1-octadecyl maleate)dioctyltin as a modifier is added to the reactor, and a coupling reaction is carried out for 20 minutes.

Then, 13.3 mmol of methanol as a reaction terminator is added to the polymer solution. A part of the styrene-butadiene copolymer solution before hydrogenation is extracted for analysis, and the solvent therein is removed by a drier to obtain a styrene-butadiene copolymer before hydrogenation.

The styrene-butadiene copolymer solution before hydrogenation is mixed with the hydrogenation catalyst in a titanium equivalent amount of 70 ppm per 100 parts by mass of the styrene-butadiene copolymer before hydrogenation to perform a hydrogenation reaction for 40 minutes at a hydrogen pressure of 0.8 MPa and an average temperature of 85°C. Thus, a modified hydrogenated styrene-butadiene copolymer 1 (modified hydrogenated SBR 1) is produced.

(Production Example 2)

A modified hydrogenated styrene-butadiene copolymer 2 (modified hydrogenated SBR 2) is produced as in Production Example 1, except that 13.6 mmol of 2,2-dimethoxy-1-(3-trimethoxysilylpropyl)-1-aza-2-silacyclopentane is added in place of the 13.6 mmol of bis(1-octadecyl maleate)dioctyltin.

(Production Example 3)

A modified hydrogenated styrene-butadiene copolymer 3 (modified hydrogenated SBR 3) is produced as in Production Example 1, except that 6.8 mmol of bis(1-octadecyl maleate)dioctyltin and 6.8 mmol of 2,2-dimethoxy-1-(3-trimethoxysilylpropyl)-1-aza-2-silacyclopentane are added in place of the 13.6 mmol of bis(1-octadecyl maleate)dioctyltin.

[Table 1]

| | Modified hydrogenated SBR 1 | Modified hydrogenated SBR 2 | Modified hydrogenated SBR 3 |
|---|---|---|---|
| Bonded styrene content (% by mass) | 8 | 8 | 8 |
| Amount (mol%) of vinyl units and butylene units | 39 | 39 | 39 |
| Weight average molecular weight (Mw) | 350,000 | 350,000 | 350,000 |
| Iodine value (g/100 g) | 108 | 108 | 108 |
| Ethylene structure content (% by mass) | 33.1 | 33.1 | 33.1 |
| Degree of hydrogenation (mol%) | 75 | 75 | 75 |

The chemicals used in examples and comparative examples are listed below.

NR: TSR20

Modified hydrogenated SBR 1 to 3: Production Examples 1 to 3 described above
SBR: SBR1502 (styrene content: 23.5% by mass) available from Sumitomo Chemical Industry Company Limited
BR: UBEPOL BR150B (cis content: 98% by mass) available from UBE Corporation
Carbon black 1: N550 ($N_2SA$: 41 $m^2/g$) available from Cabot Japan K.K.
Carbon black 2: SHOBLACK N351 ($N_2SA$: 71 $m^2/g$) available from Cabot Japan K.K.
Silica: ULTRASIL VN3 ($N_2SA$: 175 $m^2/g$) available from Degussa
Silane coupling agent: Si266 (bis(3-triethoxysilylpropyl)disulfide) available from Degussa
Oil: Diana Process oil NH-70S (aromatic process oil) available from Idemitsu Kosan Co., Ltd.
Zinc oxide: zinc oxide #1 available from Mitsui Mining & Smelting Co., Ltd.
Antioxidant 1: NOCRAC 6C (N-phenyl-N'-1,3-dimethylbutyl-p-phenylenediamine) available from Ouchi Shinko Chemical Industrial Co., Ltd.
Antioxidant 2: NOCRAC RD (poly(2,2,4-trimethyl-1,2-dihydroquinoline)) available from Ouchi Shinko Chemical Industrial Co., Ltd.
Stearic acid: TSUBAKI available from NOF Corporation
Wax: Ozoace 0355 available from Nippon Seiro Co., Ltd.
Sulfur: powdered sulfur available from Tsurumi Chemical Industry Co., Ltd.
Vulcanization accelerator: NOCCELER NS (N-tert-butyl-2-benzothiazolylsulfenamide) available from Ouchi Shinko Chemical Industrial Co., Ltd.

<Production of test tire>

(Sidewall formulation)

According to the formulation in Table 2, materials other than the sulfur and vulcanization accelerator are kneaded to obtain a kneaded mixture.
To the kneaded mixture are added the sulfur and vulcanization accelerator according to the formulation in Table 2, and they are kneaded at 70°C for eight minutes to obtain an unvulcanized rubber composition.
The unvulcanized rubber composition is extruded into the shape of a sidewall and then assembled with other tire components on a tire building machine to form an unvulcanized tire. The unvulcanized tire is press-vulcanized at 170°C for 20 minutes, whereby a test tire (size: 195/65R15, specification: Table 2) shown in FIGS. 1 and 2 is produced.

(Clinch apex formulation)

According to the formulation in Table 3, materials other than the sulfur and vulcanization accelerator are kneaded to obtain a kneaded mixture.
To the kneaded mixture are added the sulfur and vulcanization accelerator according to the formulation in Table 3, and they are kneaded at 70°C for eight minutes to obtain an unvulcanized rubber composition.
The unvulcanized rubber composition is extruded into the shape of a clinch and then assembled with other tire components on a tire building machine to form an unvulcanized tire. The unvulcanized tire is press-vulcanized at 170°C for 20 minutes, whereby a test tire (size: 195/65R15, specification: Table 3) shown in FIG. 3 is produced.

(Base tread formulation)

According to the formulation in Table 4, materials other than the sulfur and vulcanization accelerator are kneaded to obtain a kneaded mixture.
To the kneaded mixture are added the sulfur and vulcanization accelerator according to the formulation in Table 4, and they are kneaded at 70°C for eight minutes to obtain an unvulcanized rubber composition.
The unvulcanized rubber composition is extruded into the shape of a base layer and then assembled with other tire components on a tire building machine to form an unvulcanized tire. The unvulcanized tire is press-vulcanized at 170°C for 20 minutes, whereby a test tire (size: 195/65R15, specification: Table 4) shown in FIGS. 1 and 2 is produced.
Test tires produced using the compositions prepared according to the specifications varied as shown in the tables are simulated. The results calculated as described in the following evaluations are shown in the tables.
Here, the reference comparative examples are as follows.

Table 2: Comparative Example 1-1
Table 3: Comparative Example 2-1
Table 4: Comparative Example 3-1

<Acetone-extractable content AE>

A rubber specimen is cut from a test tire (the rubber specimen is cut from a sidewall, a clinch, and a base tread in Table 2, Table 3, and Table 4, respectively). The amount (% by mass) of matter extractable with acetone from the specimen is measured by a method for measuring the acetone-extractable content in accordance with JIS K 6229:2015.

Acetone-extractable content (% by mass) = [(Mass of sample before extraction) - (Mass of sample after extraction)] / (Mass of sample before extraction) × 100

<Ride quality-maintaining performance>

The test tires of each example are attached to 15×6JJ aluminum wheel rims, inflated to an internal pressure of 210 kPa (the same pressure for the front and rear tires), and then mounted on the four wheels of a front-engine, front-wheel-drive car of 2000 cc displacement made in Japan. The car is driven for 30000 km. Thereafter, a driver drives the car on a test course and subjectively evaluates the ride quality. The evaluation result is expressed as an index relative to the result in the reference comparative example taken as 100. A higher index indicates better ride quality even after a long period of time.

[Table 2]

| | | Example | | | | | | | | | | | | | | | | | | | | Comparative Example | | | |
|---|---|---|---|---|---|---|---|---|---|---|---|---|---|---|---|---|---|---|---|---|---|---|---|---|---|
| | | 1-1 | 1-2 | 1-3 | 1-4 | 1-5 | 1-6 | 1-7 | 1-8 | 1-9 | 1-10 | 1-11 | 1-12 | 1-13 | 1-14 | 1-15 | 1-16 | 1-17 | 1-18 | 1-19 | 1-20 | 1-1 | 1-2 | 1-3 | 1-4 |
| Sidewall formulation (parts by mass) | NR | 50 | 50 | 50 | 50 | 50 | 50 | 50 | 50 | 50 | 50 | 50 | 50 | 50 | 50 | 50 | 50 | 50 | 50 | 50 | 50 | 50 | 50 | 50 | 50 |
| | Modified hydrogenated SBR 1 | 10 | | | 10 | 10 | 10 | 10 | 10 | 5 | 5 | 10 | 10 | 10 | 10 | 5 | 10 | 30 | 10 | 10 | 10 | | 10 | 10 | 10 |
| | Modified hydrogenated SBR 2 | | 10 | | | | | | | | | | | | | | | | | | | | | | |
| | Modified hydrogenated SBR 3 | | | 10 | | | | | | | | | | | | | | | | | | | | | |
| | SBR | | | | | | | | | | | | | | | | | | | | | 10 | | | |
| | BR | 40 | 40 | 40 | 40 | 40 | 40 | 40 | 40 | 45 | 45 | 40 | 40 | 40 | 40 | 45 | 40 | 20 | 40 | 40 | 40 | 40 | 40 | 40 | 40 |
| | Carbon black 1 | 50 | 50 | 50 | 50 | 50 | 50 | 50 | 50 | 50 | 50 | 45 | 20 | 50 | 50 | 50 | 20 | 50 | 20 | 70 | 55 | 50 | 50 | 50 | 50 |
| | Silica | 5 | 5 | 5 | 5 | 5 | 5 | 5 | 5 | 5 | 5 | 5 | 5 | 5 | 5 | 5 | 5 | 5 | 5 | 5 | | 5 | 5 | 5 | 5 |
| | Silane coupling agent | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | | 0.4 | 0.4 | 0.4 | 0.4 |
| | Oil | 10 | 10 | 10 | 5 | 10 | 10 | 7 | 7 | 10 | 10 | 10 | 10 | 10 | 7 | 10 | 10 | 10 | 10 | 10 | 10 | 10 | | 10 | 10 |
| | Zinc oxide | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Antioxidant 1 | 2 | 2 | 2 | 2 | 2 | 2 | 2 | 2 | 2 | 2 | 2 | 2 | 2 | 2 | 2 | 2 | 2 | 2 | 2 | 2 | 2 | 1 | 2 | 2 |
| | Antioxidant 2 | 2 | 2 | 2 | 2 | 2 | 2 | 2 | 2 | 2 | 2 | 2 | 2 | 2 | 2 | 2 | 2 | 2 | 2 | 2 | 2 | 2 | 1 | 2 | 2 |
| | Stearic acid | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Sulfur | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |

| | | | | | | | | | | | | | | | | | | | | | | | | | |
|---|---|---|---|---|---|---|---|---|---|---|---|---|---|---|---|---|---|---|---|---|---|---|---|---|---|
| Specification · Evaluation | Acetone extractable content AE (% by mass) | 10.7 | 10.7 | 10.7 | 8.2 | 10.7 | 10.7 | 9.2 | 9.2 | 10.7 | 10.7 | 11.3 | 12.9 | 10.7 | 9.2 | 10.7 | 12.9 | 10.7 | 11.3 | 9.6 | 10.7 | 10.7 | 4.9 | 10.7 | 10.7 |
| | Thickness Tw (mm) of sidewall at tire maximum width position M | 5.0 | 5.0 | 5.0 | 5.0 | 10.0 | 5.0 | 8.0 | 5.0 | 8.0 | 5.0 | 8.0 | 5.0 | 5.0 | 5.0 | 5.0 | 5.0 | 5.0 | 5.0 | 5.0 | 5.0 | 5.0 | 5.0 | 14.0 | 13.0 |
| | Thickness Tt (mm) of tread portion | 7.0 | 7.0 | 7.0 | 7.0 | 7.0 | 10.0 | 7.0 | 8.5 | 7.0 | 8.5 | 7.0 | 8.5 | 11.9 | 10.0 | 10.0 | 10.0 | 7.0 | 7.0 | 7.0 | 7.0 | 7.0 | 7.0 | 13.0 | 14.0 |
| | AE/Tw | 2.1 | 2.1 | 2.1 | 1.6 | 1.1 | 2.1 | 1.2 | 1.8 | 1.3 | 2.1 | 1.4 | 2.6 | 2.1 | 1.8 | 2.1 | 2.6 | 2.1 | 2.3 | 1.9 | 2.1 | 2.1 | 1.0 | 0.8 | 0.8 |
| | AE/Tt | 1.5 | 1.5 | 1.5 | 1.2 | 1.5 | 1.1 | 1.3 | 1.1 | 1.5 | 1.3 | 1.6 | 1.5 | 0.9 | 0.9 | 1.1 | 1.3 | 1.5 | 1.6 | 1.4 | 1.5 | 1.5 | 0.7 | 0.8 | 0.8 |
| | Pc (% by mass) | 10 | 10 | 10 | 10 | 10 | 10 | 10 | 10 | 5 | 5 | 10 | 10 | 10 | 10 | 5 | 10 | 30 | 10 | 10 | 10 | 0 | 10 | 10 | 10 |
| | Pc/Tw | 2.0 | 2.0 | 2.0 | 2.0 | 1.0 | 2.0 | 1.3 | 2.0 | 0.6 | 1.0 | 1.3 | 2.0 | 2.0 | 2.0 | 1.0 | 2.0 | 6.0 | 2.0 | 2.0 | 2.0 | 0.0 | 2.0 | 0.7 | 0.8 |
| | Pc/T t | 1.4 | 1.4 | 1.4 | 1.4 | 1.4 | 1.0 | 1.4 | 1.2 | 0.7 | 0.6 | 1.4 | 1.2 | 0.8 | 1.0 | 0.5 | 1.0 | 4.3 | 1.4 | 1.4 | 1.4 | 0.0 | 1.4 | 0.8 | 0.7 |
| | Fc (parts by mass) | 55 | 55 | 55 | 55 | 55 | 55 | 55 | 55 | 55 | 55 | 50 | 25 | 55 | 55 | 55 | 25 | 55 | 25 | 75 | 55 | 55 | 55 | 55 | 55 |
| | Fc/Tw | 11.0 | 11.0 | 11.0 | 11.0 | 5.5 | 11.0 | 6.9 | 11.0 | 6.9 | 11.0 | 6.3 | 5.0 | 11.0 | 11.0 | 11.0 | 5.0 | 11.0 | 5.0 | 15.0 | 11.0 | 11.0 | 11.0 | 3.9 | 4.2 |
| | Fc/T t | 7.9 | 7.9 | 7.9 | 7.9 | 7.9 | 5.5 | 7.9 | 6.5 | 7.9 | 6.5 | 7.1 | 2.9 | 4.6 | 5.5 | 5.5 | 2.5 | 7.9 | 3.6 | 10.7 | 7.9 | 7.9 | 7.9 | 4.2 | 3.9 |
| | Silica content (% by mass) | 9.1 | 9.1 | 9.1 | 9.1 | 9.1 | 9.1 | 9.1 | 9.1 | 9.1 | 9.1 | 10.0 | 20.0 | 9.1 | 9.1 | 9.1 | 20.0 | 9.1 | 20.0 | 6.7 | 0.0 | 9.1 | 9.1 | 9.1 | 9.1 |
| | Groove width D (mm) of circumferential groove | 5.0 | 5.0 | 5.0 | 5.0 | 8.0 | 5.0 | 6.5 | 5.0 | 6.5 | 5.0 | 6.5 | 5.0 | 11.1 | 9.0 | 9.0 | 9.0 | 5.0 | 5.0 | 5.0 | 5.0 | 5.0 | 5.0 | 11.0 | 12.0 |
| | AE/D | 2.1 | 2.1 | 2.1 | 1.6 | 1.3 | 2.1 | 1.4 | 1.8 | 1.6 | 2.1 | 1.7 | 2.6 | 1.0 | 1.0 | 1.2 | 1.4 | 2.1 | 2.3 | 1.9 | 2.1 | 2.1 | 1.0 | 1.0 | 0.9 |
| | Pc/D | 2.0 | 2.0 | 2.0 | 2.0 | 1.3 | 2.0 | 1.5 | 2.0 | 0.8 | 1.0 | 1.5 | 2.0 | 0.9 | 1.1 | 0.6 | 1.1 | 6.0 | 2.0 | 2.0 | 2.0 | 0.0 | 2.0 | 0.9 | 0.8 |
| | Fc/D | 11.0 | 11.0 | 11.0 | 11.0 | 6.9 | 11.0 | 8.5 | 11.0 | 8.5 | 11.0 | 7.7 | 5.0 | 5.0 | 6.1 | 6.1 | 2.8 | 11.0 | 5.0 | 15.0 | 11.0 | 11.0 | 11.0 | 5.0 | 4.6 |
| | Ride quality-maintaining performance | 110 | 105 | 115 | 108 | 106 | 106 | 104 | 104 | 102 | 102 | 105 | 105 | 102 | 104 | 104 | 104 | 115 | 108 | 112 | 108 | 100 | 95 | 90 | 90 |

[Table 3]

| | | Example | | | | | | | | | | | | | | | | | Comparative Example | | | |
|---|---|---|---|---|---|---|---|---|---|---|---|---|---|---|---|---|---|---|---|---|---|---|
| | | 2-1 | 2-2 | 2-3 | 2-4 | 2-5 | 2-6 | 2-7 | 2-8 | 2-9 | 2-10 | 2-11 | 2-12 | 2-13 | 2-14 | 2-15 | 2-16 | 2-17 | 2-1 | 2-2 | 2-3 | 2-4 |
| Clinch apex formulation (parts by mass) | NR | 45 | 45 | 45 | 45 | 45 | 45 | 45 | 45 | 45 | 45 | 45 | 45 | 45 | 45 | 45 | 45 | 45 | 45 | 45 | 45 | 45 |
| | Modified hydrogenated SBR 1 | 10 | | | 10 | 25 | 15 | 10 | 10 | 10 | 10 | 25 | 25 | 25 | 25 | 7.5 | 25 | 10 | | 10 | 10 | 10 |
| | Modified hydrogenated SBR 2 | | 10 | | | | | | | | | | | | | | | | | | | |
| | Modified hydrogenated SBR 3 | | | 10 | | | | | | | | | | | | | | | | | | |
| | SBR | | | | | | | | | | | | | | | | | | 10 | | | |
| | BR | 45 | 45 | 45 | 45 | 30 | 40 | 45 | 45 | 45 | 45 | 30 | 30 | 30 | 30 | 47.5 | 30 | 45 | 45 | 45 | 45 | 45 |
| | Carbon black 1 | 60 | 60 | 60 | 55 | 85 | 70 | 50 | 50 | 60 | 60 | 80 | 30 | 70 | 65 | 70 | 30 | 65 | 60 | 105 | 60 | 60 |
| | Silica | 5 | 5 | 5 | 5 | 5 | 5 | 5 | 5 | 5 | 5 | 5 | 5 | 5 | 15 | 5 | 5 | 0 | 5 | 5 | 5 | 5 |
| | Silane coupling agent | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | | 0.4 | 0.4 | 0.4 | 0.4 |
| | Oil | 8 | 8 | 8 | 5 | 23 | 14 | | | 8 | 8 | 27.5 | 12 | 18 | 14 | 18 | 12 | 8 | 8 | | 8 | 8 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Antioxidant 1 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Antioxidant 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Stearic acid | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 |
| | Wax | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Sulfur | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 1 | 2.5 | 2.5 |
| | Vulcanization accelerator | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |

[Table 3 - continued]

| | | | | | | | | | | | | | | | | | | | | | | |
|---|---|---|---|---|---|---|---|---|---|---|---|---|---|---|---|---|---|---|---|---|---|---|
| Specification • Evaluation | Acetone extractable content AE (% by mass) | 10.0 | 10.0 | 10.0 | 8.8 | 14.9 | 12.2 | 6.4 | 6.4 | 10.0 | 10.0 | 16.9 | 14.1 | 13.9 | 11.9 | 13.9 | 14.1 | 10.1 | 10.0 | 4.9 | 10.0 | 10.0 |
| | Thickness Tw (mm) of clinch apex at tire maximum width position M | 5.0 | 5.0 | 5.0 | 5.0 | 9.5 | 5.0 | 4.5 | 4.0 | 6.0 | 5.0 | 11.2 | 4.0 | 5.0 | 5.0 | 5.0 | 5.0 | 5.0 | 5.0 | 5.0 | 12.5 | 13.0 |
| | Thickness Tt (mm) of tread portion | 7.0 | 7.0 | 7.0 | 7.0 | 7.0 | 9.5 | 5.5 | 7.0 | 7.0 | 8.0 | 7.0 | 11.9 | 7.0 | 11.8 | 11.0 | 11.0 | 7.0 | 7.0 | 7.0 | 13.0 | 12.5 |
| | AE/Tw | 2.0 | 2.0 | 2.0 | 1.8 | 1.6 | 2.4 | 1.4 | 1.6 | 1.7 | 2.0 | 1.51 | 3.5 | 2.8 | 2.4 | 2.8 | 2.8 | 2.0 | 2.0 | 1.0 | 0.8 | 0.8 |
| | AE/Tt | 1.4 | 1.4 | 1.4 | 1.3 | 2.1 | 1.3 | 1.2 | 0.9 | 1.4 | 1.3 | 2.4 | 1.2 | 2.0 | 1.01 | 1.26 | 1.28 | 1.4 | 1.4 | 0.7 | 0.8 | 0.8 |
| | Pc (% by mass) | 10 | 10 | 10 | 10 | 25 | 15 | 10 | 10 | 10 | 10 | 25 | 25 | 25 | 25 | 8 | 25 | 10 | 0 | 10 | 10 | 10 |
| | Pc/Tw | 2.0 | 2.0 | 2.0 | 2.0 | 2.6 | 3.0 | 2.2 | 2.5 | 1.7 | 2.0 | 2.2 | 6.3 | 5.0 | 5.0 | 1.5 | 5.0 | 2.0 | 0.0 | 2.0 | 0.8 | 0.8 |
| | Pc/T t | 1.4 | 1.4 | 1.4 | 1.4 | 3.6 | 1.6 | 1.8 | 1.4 | 1.4 | 1.3 | 3.6 | 2.1 | 3.6 | 2.1 | 0.7 | 2.3 | 1.4 | 0.0 | 1.4 | 0.8 | 0.8 |
| | Fc (parts by mass) | 65 | 65 | 65 | 60 | 90 | 75 | 55 | 55 | 65 | 65 | 85 | 35 | 75 | 80 | 75 | 35 | 65 | 65 | 110 | 65 | 65 |
| | Fc/Tw | 13.0 | 13.0 | 13.0 | 12.0 | 9.5 | 15.0 | 12.2 | 13.8 | 10.8 | 13.0 | 7.6 | 8.8 | 15.0 | 16.0 | 15.0 | 7.0 | 13.0 | 13.0 | 22.0 | 5.2 | 5.0 |
| | Fc/T t | 9.3 | 9.3 | 9.3 | 8.6 | 12.9 | 7.9 | 10.0 | 7.9 | 9.3 | 8.1 | 12.1 | 2.9 | 10.7 | 6.8 | 6.8 | 3.2 | 9.3 | 9.3 | 15.7 | 5.0 | 5.2 |
| | Silica content (% by mass) | 7.7 | 7.7 | 7.7 | 8.3 | 5.6 | 6.7 | 9.1 | 9.1 | 7.7 | 7.7 | 5.9 | 14.3 | 6.7 | 18.8 | 6.7 | 14.3 | 0.0 | 7.7 | 4.5 | 7.7 | 7.7 |
| | Groove width D (mm) of circumferential groove | 8.0 | 8.0 | 8.0 | 8.0 | 8.0 | 8.0 | 5.5 | 5.5 | 8.0 | 8.0 | 8.0 | 8.0 | 11.5 | 10.9 | 10.0 | 10.9 | 8.0 | 8.0 | 8.0 | 8.0 | 8.0 |
| | AE/D | 1.3 | 1.3 | 1.3 | 1.1 | 1.9 | 1.5 | 1.2 | 1.2 | 1.3 | 1.3 | 2.1 | 1.8 | 1.2 | 1.09 | 1.39 | 1.29 | 1.3 | 1.3 | 0.6 | 1.3 | 1.3 |
| | Pc/D | 1.3 | 1.3 | 1.3 | 1.3 | 3.1 | 1.9 | 1.8 | 1.8 | 1.3 | 1.3 | 3.1 | 3.1 | 2.2 | 2.29 | 0.8 | 2.3 | 1.3 | 0.0 | 1.3 | 1.3 | 1.3 |
| | Fc/D | 8.1 | 8.1 | 8.1 | 7.5 | 11.3 | 9.4 | 10.0 | 10.0 | 8.1 | 8.1 | 10.6 | 4.4 | 6.5 | 7.3 | 7.5 | 3.2 | 8.1 | 8.1 | 13.8 | 8.1 | 8.1 |
| | Ride quality-maintaining performance | 106 | 103 | 109 | 105 | 109 | 107 | 104 | 103 | 104 | 105 | 105 | 104 | 105 | 104 | 102 | 106 | 103 | 100 | 95 | 94 | 93 |

[Table 4]

| | | Example | | | | | | | | | | | | | | | | | | | | Comparative Example | | | |
|---|---|---|---|---|---|---|---|---|---|---|---|---|---|---|---|---|---|---|---|---|---|---|---|---|---|
| | | 3-1 | 3-2 | 3-3 | 3-4 | 3-5 | 3-6 | 3-7 | 3-8 | 3-9 | 3-10 | 3-11 | 3-12 | 3-13 | 3-14 | 3-15 | 3-16 | 3-17 | 3-18 | 3-19 | 3-20 | 3-1 | 3-2 | 3-3 | 3-4 |
| Base tread formulation (parts by mass) | NR | 60 | 60 | 60 | 60 | 60 | 60 | 60 | 60 | 60 | 60 | 60 | 60 | 60 | 60 | 60 | 60 | 60 | 60 | 60 | 60 | 60 | 60 | 60 | 60 |
| | Modified hydrogenated SBR 1 | 10 | | | 10 | 10 | 10 | 10 | 10 | 5 | 5 | 10 | 10 | 10 | 10 | 5 | 10 | 30 | 10 | 10 | 10 | | 10 | 10 | 10 |
| | Modified hydrogenated SBR 2 | | 10 | | | | | | | | | | | | | | | | | | | | | | |
| | Modified hydrogenated SBR 3 | | | 10 | | | | | | | | | | | | | | | | | | | | | |
| | SBR | | | | | | | | | | | | | | | | | | | | | 10 | | | |
| | BR | 30 | 30 | 30 | 30 | 30 | 30 | 30 | 30 | 35 | 35 | 30 | 30 | 30 | 30 | 35 | 30 | 10 | 30 | 30 | 30 | 30 | 30 | 30 | 30 |
| | Carbon black 2 | 15 | 15 | 15 | 15 | 15 | 15 | 15 | 15 | 15 | 15 | 15 | 5 | 15 | 15 | 15 | 5 | 15 | 15 | 15 | 50 | 15 | 15 | 15 | 15 |
| | Silica | 35 | 35 | 35 | 35 | 35 | 35 | 35 | 35 | 35 | 35 | 30 | 20 | 35 | 35 | 35 | 20 | 35 | 10 | 60 | | 35 | 35 | 35 | 35 |
| | Silane coupling agent | 2.8 | 2.8 | 2.8 | 2.8 | 2.8 | 2.8 | 2.8 | 2.8 | 2.8 | 2.8 | 2.4 | 1.6 | 2.8 | 2.8 | 2.8 | 1.6 | 2.8 | 0.8 | 4.8 | | 2.8 | 2.8 | 2.8 | 2.8 |
| | Oil | 8 | 8 | 8 | 2 | 8 | 8 | 2 | 3 | 8 | 8 | 8 | 8 | 8 | 3 | 8 | 8 | 8 | 8 | 8 | 8 | 5 | | 5 | 5 |
| | Zinc oxide | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Antioxidant 1 | 2 | 2 | 2 | 2 | 2 | 2 | 2 | 2 | 2 | 2 | 2 | 2 | 2 | 2 | 2 | 2 | 2 | 2 | 2 | 2 | 2 | 1 | 2 | 2 |
| | Antioxidant 2 | 2 | 2 | 2 | 2 | 2 | 2 | 2 | 2 | 2 | 2 | 2 | 2 | 2 | 2 | 2 | 2 | 2 | 2 | 2 | 2 | 2 | 1 | 2 | 2 |
| | Stearic acid | 2.0 | 2 | 2 | 2 | 2 | 2 | 2 | 2 | 2 | 2 | 2 | 2 | 2 | 2 | 2 | 2 | 2.0 | 2.0 | 2.0 | 2.0 | 2 | 2 | 2 | 2 |
| | Wax | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Sulfur | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Vulcanization accelerator | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |

| | | | | | | | | | | | | | | | | | | | | | | | | | |
|---|---|---|---|---|---|---|---|---|---|---|---|---|---|---|---|---|---|---|---|---|---|---|---|---|---|
| Specification · Evaluation | Acetone extractable content AE (% by mass) | 10.4 | 10.4 | 10.4 | 7.2 | 10.4 | 10.4 | 7.2 | 7.8 | 10.4 | 10.4 | 10.7 | 12.2 | 10.4 | 7.2 | 10.4 | 12.2 | 10.4 | 12.3 | 9.1 | 10.4 | 8.9 | 4.9 | 10.4 | 10.4 |
| | Thickness Tw (mm) of sidewall at tire maximum width position M | 5.0 | 5.0 | 5.0 | 5.0 | 10.0 | 5.0 | 8.0 | 5.0 | 8.0 | 5.0 | 8.0 | 5.0 | 5.0 | 5.0 | 5.0 | 5.0 | 5.0 | 5.0 | 5.0 | 5.0 | 5.0 | 5.0 | 14.0 | 13.0 |
| | Thickness Tt (mm) of tread portion | 7.0 | 7.0 | 7.0 | 7.0 | 7.0 | 10.0 | 7.0 | 10.0 | 7.0 | 8.5 | 7.0 | 9.0 | 11.9 | 10.0 | 10.0 | 10.0 | 7.0 | 7.0 | 7.0 | 7.0 | 7.0 | 7.0 | 13.0 | 14.0 |
| | AE/Tw | 2.1 | 2.1 | 2.1 | 1.4 | 1.0 | 2.1 | 0.9 | 1.6 | 1.3 | 2.1 | 1.3 | 2.4 | 2.1 | 1.4 | 2.1 | 2.4 | 2.1 | 2.5 | 1.8 | 2.1 | 1.8 | 1.0 | 0.7 | 0.8 |
| | AE/Tt | 1.5 | 1.5 | 1.5 | 1.0 | 1.5 | 1.0 | 1.0 | 0.8 | 1.5 | 1.2 | 1.5 | 1.4 | 0.9 | 0.7 | 1.0 | 1.2 | 1.5 | 1.8 | 1.3 | 1.5 | 1.3 | 0.7 | 0.8 | 0.7 |
| | Pc (% by mass) | 10 | 10 | 10 | 10 | 10 | 10 | 10 | 10 | 5 | 5 | 10 | 10 | 10 | 10 | 5 | 10 | 30 | 10 | 10 | 10 | 0 | 10 | 10 | 10 |
| | Pc/Tw | 2.0 | 2.0 | 2.0 | 2.0 | 1.0 | 2.0 | 1.3 | 2.0 | 0.6 | 1.0 | 1.3 | 2.0 | 2.0 | 2.0 | 1.0 | 2.0 | 6.0 | 2.0 | 2.0 | 2.0 | 0.0 | 2.0 | 0.7 | 0.8 |
| | Pc/T t | 1.4 | 1.4 | 1.4 | 1.4 | 1.4 | 1.0 | 1.4 | 1.0 | 0.7 | 0.6 | 1.4 | 1.1 | 0.8 | 1.0 | 0.5 | 1.0 | 4.3 | 1.4 | 1.4 | 1.4 | 0.0 | 1.4 | 0.8 | 0.7 |
| | Fc (parts by mass) | 50 | 50 | 50 | 50 | 50 | 50 | 50 | 50 | 50 | 50 | 45 | 25 | 50 | 50 | 50 | 25 | 50 | 25 | 75 | 50 | 50 | 50 | 50 | 50 |
| | Fc/Tw | 10.0 | 10.0 | 10.0 | 10.0 | 5.0 | 10.0 | 6.3 | 10.0 | 6.3 | 10.0 | 5.6 | 5.0 | 10.0 | 10.0 | 10.0 | 5.0 | 10.0 | 5.0 | 15.0 | 10.0 | 10.0 | 10.0 | 3.6 | 3.8 |
| | Fc/T t | 7.1 | 7.1 | 7.1 | 7.1 | 7.1 | 5.0 | 7.1 | 5.0 | 7.1 | 5.9 | 6.4 | 2.8 | 4.2 | 5.0 | 5.0 | 2.5 | 7.1 | 3.6 | 10.7 | 7.1 | 7.1 | 7.1 | 3.8 | 3.6 |
| | Silica content (% by mass) | 70.0 | 70.0 | 70.0 | 70.0 | 70.0 | 70.0 | 70.0 | 70.0 | 70.0 | 70.0 | 66.7 | 80.0 | 70.0 | 70.0 | 70.0 | 80.0 | 70.0 | 40.0 | 80.0 | 0.0 | 70.0 | 70.0 | 70.0 | 70.0 |
| | Groove width D (mm) of circumferential groove | 5.0 | 5.0 | 5.0 | 5.0 | 8.0 | 5.0 | 6.5 | 5.0 | 6.5 | 5.0 | 6.5 | 5.0 | 11.1 | 9.0 | 9.0 | 9.0 | 5.0 | 5.0 | 5.0 | 5.0 | 5.0 | 5.00 | 11.00 | 12.00 |
| | AE/D | 2.1 | 2.1 | 2.1 | 1.4 | 1.3 | 2.1 | 1.1 | 1.6 | 1.6 | 2.1 | 1.6 | 2.4 | 0.9 | 0.8 | 1.2 | 1.4 | 2.1 | 2.5 | 1.8 | 2.1 | 1.8 | 1.0 | 0.9 | 0.9 |
| | Pc/D | 2.0 | 2.0 | 2.0 | 2.0 | 1.3 | 2.0 | 1.5 | 2.0 | 0.8 | 1.0 | 1.5 | 2.0 | 0.9 | 1.1 | 0.6 | 1.1 | 6.0 | 2.0 | 2.0 | 2.0 | 0.0 | 2.0 | 0.9 | 0.8 |
| | Fc/D | 10.0 | 10.0 | 10.0 | 10.0 | 6.3 | 10.0 | 7.7 | 10.0 | 7.7 | 10.0 | 6.9 | 5.0 | 4.5 | 5.6 | 5.6 | 2.8 | 10.0 | 5.0 | 15.0 | 10.0 | 10.0 | 10.0 | 4.5 | 4.2 |
| | Ride quality-maintaining performance | 110 | 105 | 115 | 108 | 106 | 106 | 104 | 104 | 102 | 102 | 105 | 105 | 102 | 104 | 104 | 104 | 115 | 108 | 112 | 108 | 100 | 95 | 90 | 90 |

REFERENCE SIGNS LIST

2 tire
4 tread portion
6 sidewall
8 wing
10 clinch (clinch apex)
12 bead
14 carcass
16 belt layer
18 band
20 innerliner
22 chafer
24 tread surface
26 groove
28 base layer (base tread)
30 cap layer
32 core
34 apex
36 carcass ply
36a main portion
36b folded portion
38 interior layer
40 exterior layer
42 main groove
44 rib
CL equator of tire 2
Tt thickness of tread portion
M tire maximum width position
D groove depth of circumferential main groove in tread portion

## Claims

**1.** A tire comprising a tire component, the tire component comprising:

a rubber component including a copolymer having an ethylene unit and a styrene unit and having a modifying group capable of reacting with at least one of carbon black or silica, and at least one of an isoprene-based rubber or polybutadiene rubber; and
carbon black,

the tire satisfying the following formula (1) and at least one of the following formula (2) or the following formula (3):

$$(1)\ AE > 5.0$$

where AE denotes an acetone extractable content (% by mass) of the tire component, wherein AE is measured using a vulcanized rubber composition constituting the tire component by a method for measuring the acetone extractable content in accordance with JIS K 6229:2015,

$$(2)\ Tw < 12.0$$

where Tw denotes a thickness (mm) of a surface rubber layer at a tire maximum width position,

$$(3)\ Tt < 12.0$$

where Tt denotes a thickness (mm) of a tread portion.

**2.** The tire according to claim 1, further satisfying the following formula:

$$AE > 9.0$$

where AE denotes an acetone extractable content (% by mass) of the tire component.

**3.** The tire according to claim 1 or 2, further satisfying the following formula:

$$Tw < 9.0$$

where Tw denotes a thickness (mm) of a surface rubber layer at a tire maximum width position.

**4.** The tire according to any one of claims 1 to 3, further satisfying the following formula:

$$Tt < 9.0$$

where Tt denotes a thickness (mm) of a tread portion.

**5.** The tire according to any one of claims 1 to 4,
wherein the tire component is at least one selected from the group consisting of a sidewall, a clinch apex, and a base tread.

**6.** The tire according to any one of claims 1 to 5, further satisfying the following formula:

$$AE/Tw > 1.5$$

where AE denotes an acetone extractable content (% by mass) of the tire component, and Tw denotes a thickness (mm) of a surface rubber layer at a tire maximum width position.

**7.** The tire according to any one of claims 1 to 6, further satisfying the following formula:

$$AE/Tt > 1.1$$

where AE denotes an acetone extractable content (% by mass) of the tire component, and Tt denotes a thickness (mm) of a tread portion.

**8.** The tire according to any one of claims 1 to 7, further satisfying the following formula:

$$Pc/Tw > 1.9$$

where Pc denotes an amount (% by mass) of the copolymer having an ethylene unit and a styrene unit and having a modifying group capable of reacting with at least one of carbon black or silica based on 100% by mass of the rubber component in the tire component, and Tw denotes a thickness (mm) of a surface rubber layer at a tire maximum width position.

**9.** The tire according to any one of claims 1 to 8, further satisfying the following formula:

$$Pc/Tt > 1.3$$

where Pc denotes an amount (% by mass) of the copolymer having an ethylene unit and a styrene unit and having a modifying group capable of reacting with at least one of carbon black or silica based on 100% by mass of the rubber component in the tire component, and Tt denotes a thickness (mm) of a tread portion.

**10.** The tire according to any one of claims 1 to 9, further satisfying the following formula:

$$Fc/Tw > 8.0$$

where Fc denotes an amount (parts by mass) of a filler per 100 parts by mass of the rubber component in the tire component, and Tw denotes a thickness (mm) of a surface rubber layer at a tire maximum width position.

**11.** The tire according to any one of claims 1 to 10, further satisfying the following formula:

$$Fc/Tt > 3.2$$

where Fc denotes an amount (parts by mass) of a filler per 100 parts by mass of the rubber component in the tire component, and Tt denotes a thickness (mm) of a tread portion.

**12.** The tire according to any one of claims 1 to 11, further satisfying the following formula:

$$D < 11.0$$

where D denotes a groove depth (mm) of a circumferential groove in a tread portion.

**13.** The tire according to any one of claims 1 to 12, further satisfying the following formula:

$$AE/D > 1.1$$

where AE denotes an acetone extractable content (% by mass) of the tire component, and D denotes a groove depth (mm) of a circumferential groove in a tread portion.

**14.** The tire according to any one of claims 1 to 13, further satisfying the following formula:

$$Pc/D > 1.0$$

where Pc denotes an amount (% by mass) of the copolymer having an ethylene unit and a styrene unit and having a modifying group capable of reacting with at least one of carbon black or silica based on 100% by mass of the rubber component in the tire component, and D denotes a groove depth (mm) of a circumferential groove in a tread portion.

**15.** The tire according to any one of claims 1 to 14, further satisfying the following formula:

$$Fc/D > 3.5$$

where Fc denotes an amount (parts by mass) of a filler per 100 parts by mass of the rubber component in the tire component, and D denotes a groove depth (mm) of a circumferential groove in a tread portion.

## Patentansprüche

1. Reifen, umfassend eine Reifenkomponente,
wobei die Reifenkomponente umfasst:

eine Kautschukkomponente, die ein Copolymer enthält, das eine Ethylen-Einheit und eine Styrol-Einheit aufweist und eine modifizierende Gruppe aufweist, die fähig ist, mit zumindest einem von Ruß oder Siliziumdioxid zu reagieren, und mindestens einen von einem Isoprenbasierten Kautschuk oder Polybutadien-Kautschuk; und Ruß,
wobei der Reifen der folgenden Formel (1) und mindestens einer von der folgenden Formel (2) oder der folgenden Formel (3) genügt:

$$(1)\quad AE > 5{,}0$$

worin AE einen Aceton-extrahierbaren Gehalt (Massen-%) der Reifenkomponente bezeichnet, wobei AE unter Verwendung einer vulkanisierten Kautschukzusammensetzung, welche die Reifenkomponente bildet, durch ein Verfahren zum Messen des Aceton-extrahierbaren Gehalts gemäß JIS K 6229:2015 gemessen ist,

$$(2)\quad Tw < 12{,}0$$

worin Tw eine Dicke (mm) einer Oberflächenkautschukschicht an einer Position maximaler Reifenbreite bezeichnet,

$$(3)\quad Tt < 12{,}0$$

worin Tt eine Dicke (mm) eines Laufstreifenabschnitts bezeichnet.

2. Reifen nach Anspruch 1, der zudem der folgenden Formel genügt:

$$AE > 9{,}0$$

worin AE einen Aceton-extrahierbaren Gehalt (Massen-%) der Reifenkomponente bezeichnet.

3. Reifen nach Anspruch 1 oder 2, der zudem der folgenden Formel genügt:

$$Tw < 9{,}0$$

worin Tw eine Dicke (mm) einer Oberflächenkautschukschicht an einer Position maximaler Reifenbreite bezeichnet.

4. Reifen nach einem der Ansprüche 1 bis 3, der zudem der folgenden Formel genügt:

$$Tt < 9{,}0$$

worin Tt eine Dicke (mm) eines Laufstreifenabschnitts bezeichnet.

5. Reifen nach einem der Ansprüche 1 bis 4,
wobei die Reifenkomponente mindestens eine ist, welche ausgewählt ist aus der Gruppe bestehend aus einer Seitenwand, einem Wulstband und einem Basislaufstreifen.

6. Reifen nach einem der Ansprüche 1 bis 5, der zudem der folgenden Formel genügt:

$$AE/Tw > 1{,}5$$

worin AE einen Aceton-extrahierbaren Gehalt (Massen-%) der Reifenkomponente bezeichnet, und Tw eine Dicke (mm) einer Oberflächenkautschukschicht an einer Position maximaler Reifenbreite bezeichnet.

**7.** Reifen nach einem der Ansprüche 1 bis 6, der zudem der folgenden Formel genügt:

$$AE/Tt > 1,1$$

worin AE einen Aceton-extrahierbaren Gehalt (Massen-%) der Reifenkomponente bezeichnet, und Tt eine Dicke (mm) eines Laufstreifenabschnitts bezeichnet.

**8.** Reifen nach einem der Ansprüche 1 bis 7, der zudem der folgenden Formel genügt:

$$Pc/Tw > 1,9$$

worin Pc eine Menge (Massen-%) des Copolymers, das eine Ethylen-Einheit und eine Styrol-Einheit aufweist und eine modifizierende Gruppe aufweist, die fähig ist, mit zumindest einem von Ruß oder Siliziumdioxid zu reagieren, bezogen auf 100 Massen-% der Kautschukkomponente in der Reifenkomponente bezeichnet, und Tw eine Dicke (mm) einer Oberflächenkautschukschicht an einer Position maximaler Reifenbreite bezeichnet.

**9.** Reifen nach einem der Ansprüche 1 bis 8, der zudem der folgenden Formel genügt:

$$Pc/Tt > 1,3$$

worin Pc eine Menge (Massen-%) des Copolymers, das eine Ethylen-Einheit und eine Styrol-Einheit aufweist und eine modifizierende Gruppe aufweist, die fähig ist, mit zumindest einem von Ruß oder Siliziumdioxid zu reagieren, bezogen auf 100 Massen-% der Kautschukkomponente in der Reifenkomponente bezeichnet, und Tt eine Dicke (mm) eines Laufstreifenabschnitts bezeichnet.

**10.** Reifen nach einem der Ansprüche 1 bis 9, der zudem der folgenden Formel genügt:

$$Fc/Tw > 8,0$$

worin Fc eine Menge (Massenteile) eines Füllstoffes pro 100 Massenteile der Kautschukkomponente in der Reifenkomponente bezeichnet, und Tw eine Dicke (mm) einer Oberflächenkautschukschicht an einer Position maximaler Reifenbreite bezeichnet.

**11.** Reifen nach einem der Ansprüche 1 bis 10, der zudem der folgenden Formel genügt:

$$Fc/Tt > 3,2$$

worin Fc eine Menge (Massenteile) eines Füllstoffes pro 100 Massenteile der Kautschukkomponente in der Reifenkomponente bezeichnet, und Tt eine Dicke (mm) eines Laufstreifenabschnitts bezeichnet.

**12.** Reifen nach einem der Ansprüche 1 bis 11, der zudem der folgenden Formel genügt:

$$D < 11,0$$

worin D eine Rillentiefe (mm) einer Umfangsrille in einem Laufstreifenabschnitt bezeichnet.

**13.** Reifen nach einem der Ansprüche 1 bis 12, der zudem der folgenden Formel genügt:

$$AE/D > 1,1$$

worin AE einen Aceton-extrahierbaren Gehalt (Massen-%) der Reifenkomponente bezeichnet, und D eine Rillentiefe (mm) einer Umfangsrille in einem Laufstreifenabschnitt bezeichnet.

**14.** Reifen nach einem der Ansprüche 1 bis 13, der zudem der folgenden Formel genügt:

$$Pc/D > 1{,}0$$

worin Pc eine Menge (Massen-%) des Copolymers, das eine Ethylen-Einheit und eine Styrol-Einheit aufweist und eine modifizierende Gruppe aufweist, die fähig ist, mit zumindest einem von Ruß oder Siliziumdioxid zu reagieren, bezogen auf 100 Massen-% der Kautschukkomponente in der Reifenkomponente bezeichnet, und D eine Rillentiefe (mm) einer Umfangsrille in einem Laufstreifenabschnitt bezeichnet.

**15.** Reifen nach einem der Ansprüche 1 bis 14, der zudem der folgenden Formel genügt:

$$Fc/D > 3{,}5$$

worin Fc eine Menge (Massenteile) eines Füllstoffes pro 100 Massenteile der Kautschukkomponente in der Reifenkomponente bezeichnet, und D eine Rillentiefe (mm) einer Umfangsrille in einem Laufstreifenabschnitt bezeichnet.

## Revendications

**1.** Pneumatique comprenant un composant de pneumatique,
le composant de pneu comprenant :

un composant de caoutchouc incluant un copolymère présentant une unité éthylène et une unité styrène et présentant un groupe de modification capable de réagir avec au moins un parmi le noir de carbone ou la silice, et au moins un parmi un caoutchouc à base d'isoprène ou un caoutchouc polybu-tadiène ; et
du noir de carbone,
le pneumatique satisfaisant la formule suivante (1) et au moins une parmi la formule (2) suivante ou la formule (3) suivante :

$$(1) \qquad AE > 5{,}0$$

où AE représente une teneur en acétone extractible (% en masse) du composant de pneu, dans lequel AE est mesurée en utilisant une composition de caoutchouc vulcanisé constituant le composant de pneu par un procédé de mesure de la teneur en acétone extractible conformément à la norme JIS K 6229:2015,

$$(2) \qquad Tw < 12{,}0$$

où Tw représente une épaisseur (mm) d'une couche de caoutchouc de surface dans une position de largeur maximale du pneu,

$$(3) \qquad Tt < 12{,}0$$

où Tt représente une épaisseur (mm) d'une partie de bande de roulement.

**2.** Pneumatique selon la revendication 1, satisfaisant en outre la formule suivante :

$$AE > 9{,}0$$

où AE représente une teneur en acétone extractible (% en masse) du composant de pneu.

**3.** Pneumatique selon la revendication 1 ou 2, satisfaisant en outre la formule suivante :

$$Tw < 9{,}0$$

où Tw représente une épaisseur (mm) d'une couche de caoutchouc de surface dans une position de la largeur

maximale du pneu.

4. Pneumatique selon l'une quelconque des revendications 1 à 3, satisfaisant en outre la formule suivante :

$$Tt < 9,0$$

où Tt représente une épaisseur (mm) d'une partie de bande de roulement.

5. Pneumatique selon l'une quelconque des revendications 1 à 4, dans lequel le composant de pneu est au moins un choisi dans le groupe constitué d'une paroi latérale, d'un apex de rivet, et d'une bande de roulement de base.

6. Pneumatique selon l'une quelconque des revendications 1 à 5, satisfaisant en outre la formule suivante :

$$AE/Tw > 1,5$$

où AE représente une teneur en acétone extractible (% en masse) du composant de pneu, et Tw représente une épaisseur (mm) d'une couche de caoutchouc de surface, dans une position de la largeur maximale d'un pneu.

7. Pneumatique selon l'une quelconque des revendications 1 à 6, satisfaisant en outre la formule suivante :

$$AE/Tt > 1,1$$

où AE représente une teneur en acétone extractible (% en masse) du composant de pneu, et Tt représente une épaisseur (mm) de la partie de bande de roulement.

8. Pneumatique selon l'une quelconque des revendications 1 à 7, satisfaisant en outre la formule suivante :

$$Pc/Tw > 1,9$$

où Pc représente une quantité (% en masse) du copolymère présentant une unité éthylène et une unité styrène et présentant un groupe de modification capable de réagir avec au moins un parmi le noir de carbone ou la silice sur la base de 100 % en masse du composant de caoutchouc dans le composant de pneu, et Tw représente une épaisseur (mm) d'une couche de caoutchouc de surface dans une position de largeur maximale du pneu.

9. Pneumatique selon l'une quelconque des revendications 1 à 8, satisfaisant en outre la formule suivante :

$$Pc/Tt > 1,3$$

où Pc représente une quantité (% en masse) du copolymère présentant une unité éthylène et une unité styrène et présentant un groupe de modification capable de réagir avec au moins un élément le noir de carbone ou la silice sur la base de 100 % en masse du composant de caoutchouc dans le composant de pneu, et Tt représente une épaisseur (mm) de la partie de bande de roulement.

10. Pneumatique selon l'une quelconque des revendications 1 à 9, satisfaisant en outre la formule suivante :

$$Fc/Tw > 8,0$$

où Fc représente une quantité (parties en masse) d'une charge par 100 parties en masse du composant de caoutchouc dans le composant de pneu, et Tw représente une épaisseur (mm) d'une couche de caoutchouc de surface dans une position de largeur maximale du pneu.

11. Pneumatique selon l'une quelconque des revendications 1 à 10, satisfaisant en outre la formule suivante :

$$Fc/Tt > 3,2$$

où Fc représente une quantité (parties en masse) d'une charge par 100 parties en masse du composant de caoutchouc dans le composant de pneu, et Tt représente une épaisseur (mm) d'une partie de bande de roulement.

**12.** Pneumatique selon l'une quelconque des revendications 1 à 11, satisfaisant en outre la formule suivante :

$$D < 11,0$$

où D représente une profondeur de rainure (mm) d'une rainure circonférentielle dans une partie de bande de roulement.

**13.** Pneumatique selon l'une quelconque des revendications 1 à 12, satisfaisant en outre la formule suivante :

$$AE/D > 1,1$$

où AE représente une teneur en acétone extractible (% en masse) du composant de pneu, et D représente une profondeur de rainure (mm) d'une rainure circonférentielle dans une partie de bande de roulement.

**14.** Pneumatique selon l'une quelconque des revendications 1 à 13, satisfaisant en outre la formule suivante :

$$Pc/D > 1,0$$

où Pc représente une quantité (% en masse) du copolymère présentant une unité éthylène et une unité styrène et présentant un groupe de modification capable de réagir avec au moins un parmi le noir de carbone ou la silice sur la base de 100 % en masse du composant de caoutchouc dans le composant de pneu, et D représente une profondeur de rainure (mm) d'une rainure circonférentielle dans une partie de bande de roulement.

**15.** Pneumatique selon l'une quelconque des revendications 1 à 14, satisfaisant en outre la formule suivante :

$$Fc/D > 35$$

où Fc représente une quantité (parties en masse) d'une charge par 100 parties en masse du composant de caoutchouc dans le composant de pneu, et D représente une profondeur de rainure (mm) d'une rainure circonférentielle dans une partie de bande de roulement.

FIG. 1

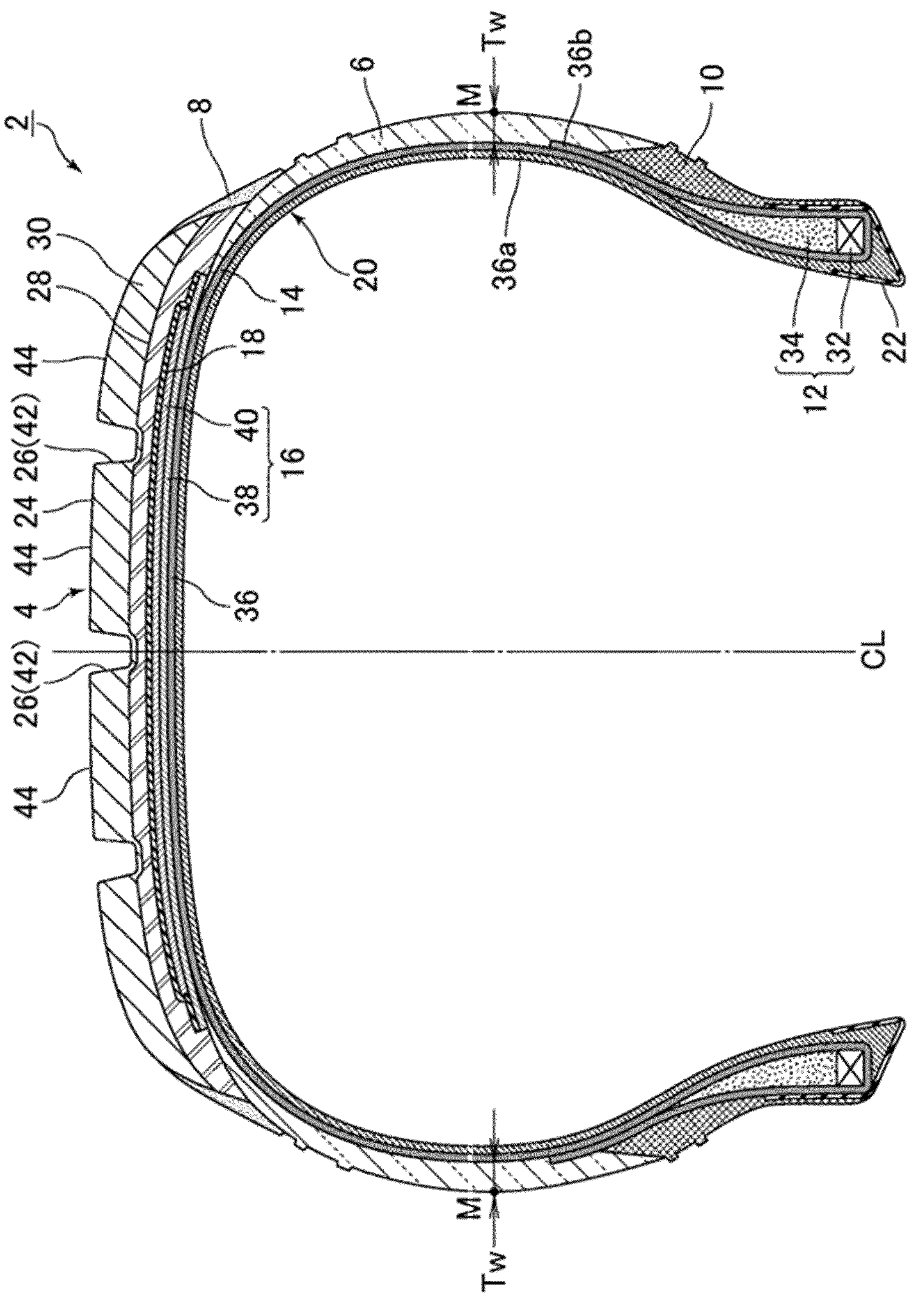
2
8
6
M
Tw
36b
10
30
28
44
26(42)
24
44
4
26(42)
44
14
20
36a
18
40
16
38
36
34
32
12
22
CL
M
Tw

FIG. 2

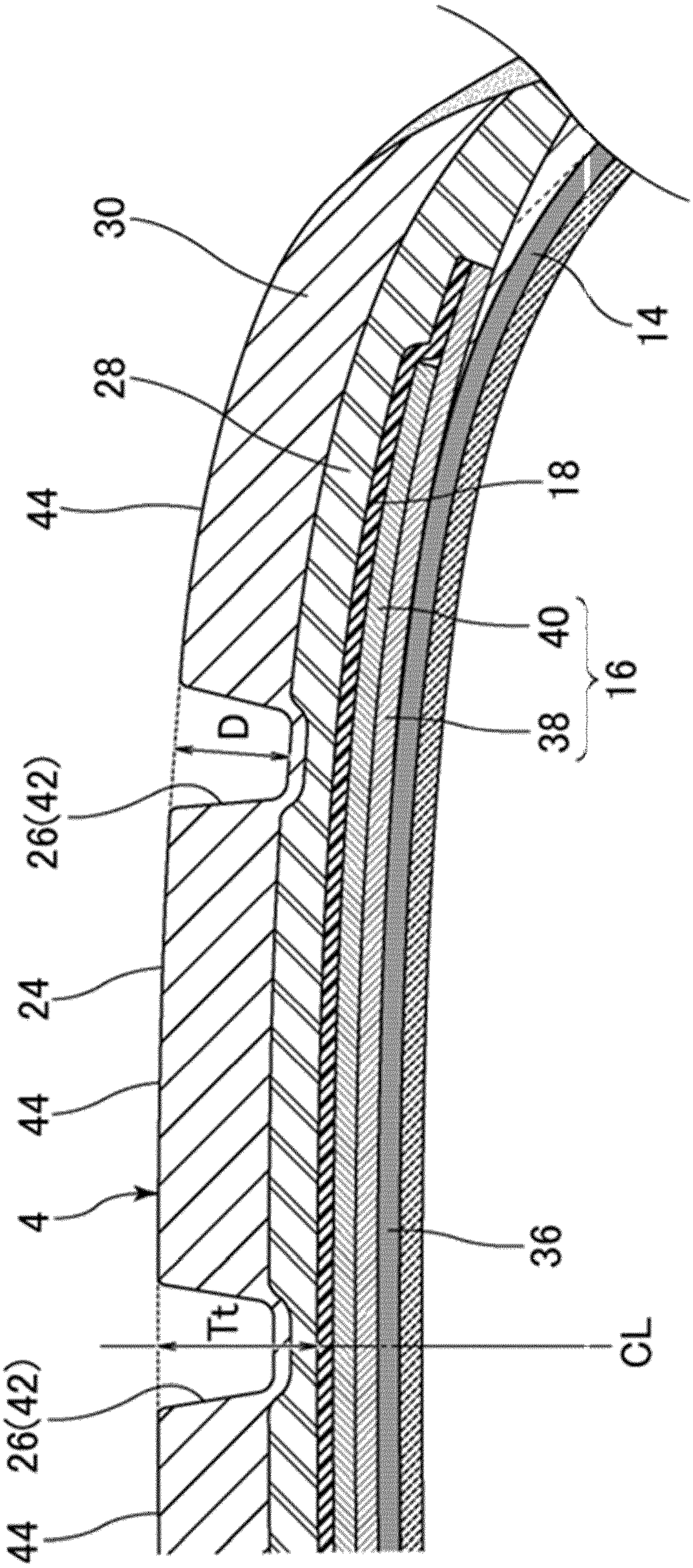

FIG. 3

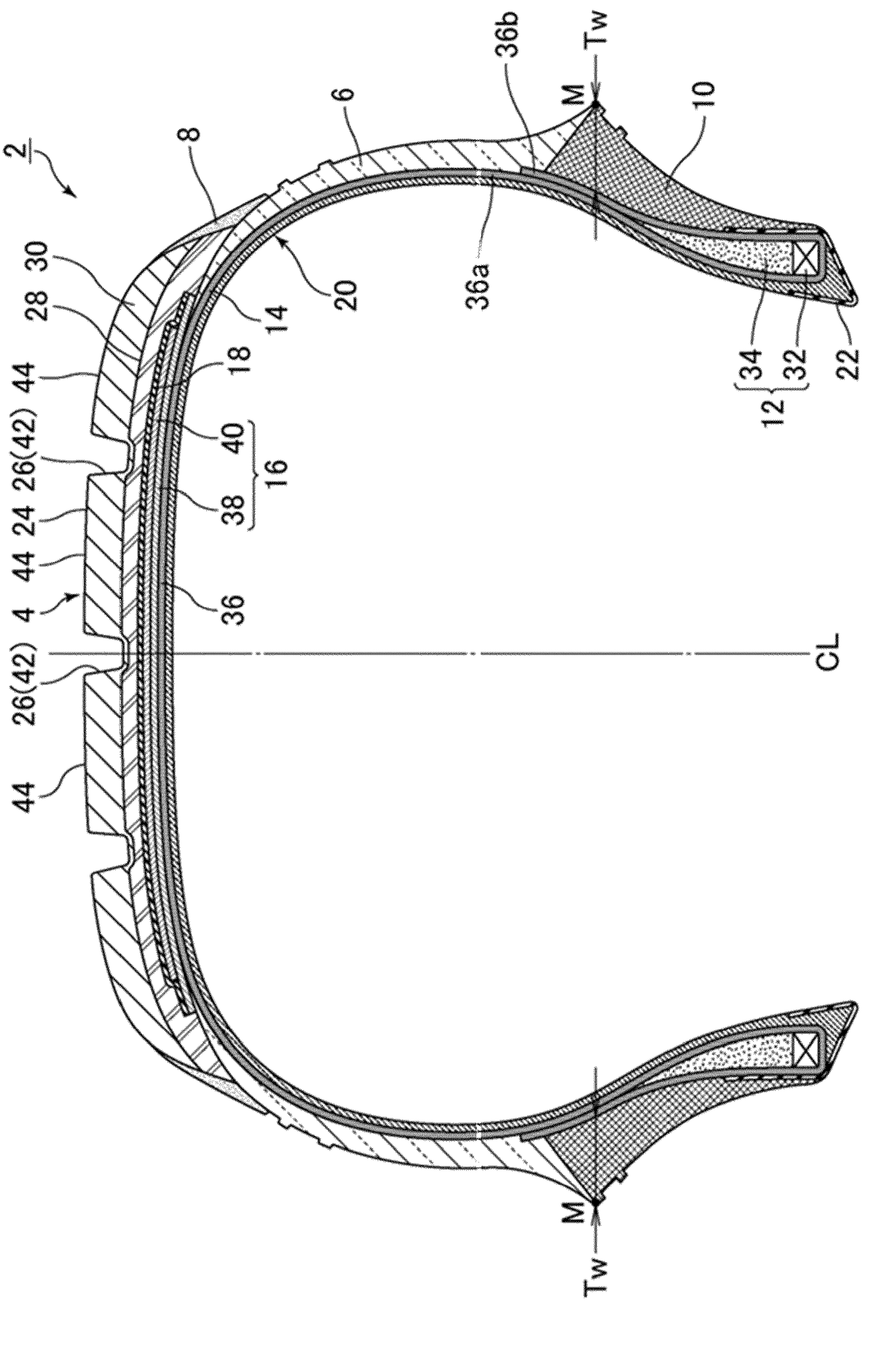
2
4
6
8
10
12
14
16
18
20
22
24
26(42)
26(42)
28
30
32
34
36
36a
36b
38
40
44
44
44
M
M
Tw
Tw
CL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9605250 A
- JP 2000053706 A
- WO 2003085010 A
- WO 2019151126 A
- WO 2019151127 A
- WO 2002002663 A
- WO 2015006179 A
- WO 2019078083 A
- WO 2019171679 A
- WO 2019142501 A
- US 4414370 A
- JP S596207 A
- JP H558005 B
- JP H1313522 A
- US 5010166 A


### Non-patent literature cited in the description


- TREND. Toagosei Co., Ltd., 2000, vol. 3, 42-45
- **R. R. HAMPTON**. *Analytical Chemistry*, 1949, vol. 21, 923